# EUROPEAN PATENT APPLICATION

(11) **EP 3 971 668 A1**
(43) Date of publication of application: **23.03.2022**
(21) Application number: 20805457.7
(22) Date of filing: 04.03.2020
(51) Int. Cl.: G05B 23/02

(54) **SIMULATION DEVICE, SIMULATION METHOD, AND PROGRAM**

(30) Priority: 16.05.2019 JP 2019092669
(71) Applicant: OMRON Corporation, Shiokoji-dori, Shimogyo-ku Kyoto-shi Kyoto 600-8530 (JP)
(72) Inventor: SHIMAKAWA, Haruna, Kyoto-shi, Kyoto 600-8530 (JP)
(74) Representative: Mewburn Ellis LLP
(86) International application number: PCT/JP2020/009128
(87) International publication number: WO 2020/230416

(57) **Abstract**

A simulation environment estimating a behavior of a system including a control device controlling a target is easily implemented. A simulation device includes: program execution means configured to execute a simulation program estimating the behavior; three-dimensional virtualization means configured to virtually construct the system in a three-dimensional virtual space; setting means configured to execute setting generating or updating data referred to during the execution of the simulation program; and reception means configured to receive a user operation to the simulation device. The setting means selectively executes setting based on a position in a three-dimensional virtual space or setting based on an operating condition according to the user operation.

## Description

### TECHNICAL FIELD

The present disclosure relates to a simulation device, a simulation method, and a program.

### BACKGROUND ART

In a Factory Automation (FA) field, various automatic control techniques are widely used. At a stage of designing or considering a system to which the automatic control techniques are applied, evaluation of performance of the system is previously required. A method for performing the evaluation based on data obtained by simulating the motion of the evaluation target has been proposed related to such needs.

For example, PTL 1 (Japanese Patent Laying-Open No. 2015-176340) discloses a PLC (Programmable Logic Controller) support device capable of checking whether there is an error in a user program by executing a virtual device program that simulates an actual device instead of the actual device even when all the actual devices are not connected to a PLC.

### CITATION LIST

### PATENT LITERATURE

PTL 1: Japanese Patent Laying-Open No. 2015-176340

### SUMMARY OF INVENTION

### TECHNICAL PROBLEM

When the simulation estimating a behavior of a drive device driving a control target is performed like the simulation of a PLC program of an actual machine, for example, a user performs operation of setting related to an IO program in order to generate or update IO data (input and output data) corresponding to the actual device instead of the actual device connected to the PLC. In recent years, the number of types of devices connected to the PLC tends to increase. Accordingly, it is desired to provide an environment that enables easy operation related to the above setting operation.

Japanese Patent Laying-Open No. 2015-176340 discloses that the virtual device program is executed instead of the actual device, but does not propose an environment that meets the above needs.

An object of the present disclosure is to provide an environment in which the user can easily implement the simulation estimating the behavior of the system including the control device controlling the target.

### SOLUTION TO PROBLEM

In one aspect of the present disclosure, provided is a simulation device that estimates a behavior of a system including a control device that controls a target, the simulation device includes: program execution means configured to execute a simulation program estimating the behavior; three-dimensional virtualization means configured to virtually construct the system in a three-dimensional virtual space; setting means configured to execute setting generating or updating data referred to during the execution of the simulation program; and reception means configured to receive a user operation to the simulation device. The setting means selectively executes setting based on a position in the three-dimensional virtual space or setting based on an operating condition according to the user operation.

According to the present disclosure, the setting means selectively executes the setting generating or updating the data referred to by the simulation program according to the user operation as the setting based on the position in the three-dimensional virtual space or the setting based on the operation condition. Thus, an environment in which the device simulates the behavior of the real system connected to the control device can be easily implemented by the user operation.

In the above disclosure, the system includes a sensor that performs a detection operation for the control, and the setting based on the position in the three-dimensional virtual space includes a setting generating or updating data associated with an object corresponding to the sensor arranged in the three-dimensional virtual space.

According to the disclosure, the setting in which the data referred to during the execution of the simulation program is generated or updated using the data associated with the object corresponding to the sensor disposed on the virtual space can be executed.

In the above disclosure, the three-dimensional virtualization means generates drawing data for visualizing the object corresponding to the sensor disposed in the three-dimensional virtual space in the three-dimensional virtual space and drawing the object on a display.

According to this disclosure, when the setting means executes the above setting, the object corresponding to the sensor disposed in the three-dimensional virtual space can be visualized and presented to the user.

In the above disclosure, the system includes: a sensor that performs a detection operation for the control; and a peripheral device that operates in association with the control, the detection operation of the sensor is linked with the operation of the peripheral device, and the operation condition includes a condition based on the detection operation of the sensor linked with the operation of the peripheral device.

According to this disclosure, the data referred to during the execution of the simulation program can include the data according to the condition based on the detection operation of the sensor linked with the operation of the peripheral device related to the control.

In the above disclosure, the setting generating or updating the data executed by the setting means includes a program corresponding to a parameter received by the user operation.

According to this disclosure, the generation or update of the data referred to during the execution of the simulation program can be implemented by the execution of the program corresponding to the parameter received by the user operation.

In the above disclosure, the three-dimensional virtualization means generates drawing data for visualizing the motion of the target during the execution of the simulation program in the three-dimensional virtual space and drawing the motion on the display.

According to this disclosure, when the simulation program is executed, the behavior of the system estimated by the execution can be visualized and presented in the three-dimensional virtual space.

In another aspect of the present disclosure, provided is a simulation method executed by a computer that estimates a behavior of a system including a control device that controls a target, the simulation method includes: virtually constructing the system in a three-dimensional virtual space; and executing setting generating or updating data referred to during execution of a simulation program. In executing the setting, setting based on a position in the three-dimensional virtual space or setting based on an operating condition is selectively executed according to a user operation to the computer.

According to the present disclosure, in the setting step, the setting for generating or updating the data referred to by the simulation program is selectively executed according to the user operation as the setting based on the position in the three-dimensional virtual space or the setting based on the operation condition. Thus, an environment in which the device simulates the behavior of the real system connected to the control device can be easily implemented by the user operation.

In still another aspect of the present disclosure, a program causing a computer to execute the simulation method is provided.

By implementing the program, the setting for generating or updating the data referred to by the simulation program is selectively executed according to the user operation as the setting based on the position in the three-dimensional virtual space or the setting based on the operation condition. Thus, an environment in which the device simulates the behavior of the real system connected to the control device can be easily implemented by the user operation.

### BRIEF DESCRIPTION OF DRAWINGS

Fig. 1 is a schematic diagram illustrating a configuration example of a control system 1 that is a simulation target according to an embodiment.
Fig. 2 is a view illustrating an example in which a system model constructed in a three-dimensional virtual space by a simulation device 100 of the embodiment is visualized.
Fig. 3 is a schematic diagram illustrating an example of a unit configuration of the control system 1 according to the embodiment.
Fig. 4 is a view schematically illustrating a configuration of the simulation device 100 of the embodiment.
Fig. 5 is a view schematically illustrating a configuration of an offline system 20 of the embodiment.
Fig. 6 is a view schematically illustrating a configuration example of a program execution unit 31 in Fig. 5.
Fig. 7 is a view illustrating processing of the offline system 20 executed by the simulation device 100 of the embodiment.
Fig. 8 is a view illustrating the processing of the offline system 20 executed by the simulation device 100 of the embodiment.
Fig. 9 is a flowchart illustrating an example of schematic processing of IO setting according to the embodiment.
Fig. 10 is a flowchart illustrating an example of IO stub generation processing in Fig. 9.
Fig. 11 is a flowchart illustrating an example of processing for editing a setting table of the embodiment.
Fig. 12 is a view illustrating an example of an IO device linked with operation of a peripheral device of the embodiment.
Fig. 13 is a view illustrating an example of an IO stub generated according to an implementation method (3) of the embodiment.
Fig. 14 is a view illustrating an example of an IO device of the embodiment and a method for implementing the IO stub for each type of the IO device.
Fig. 15 is a view illustrating a display example of a list of input variables according to the embodiment.
Fig. 16 is a view illustrating an example of a display screen when the IO stub of the embodiment is automatically generated.
Fig. 17 is a view illustrating a display example of a setting table 392 of an input variable designated as "3D arrangement" of the embodiment.
Fig. 18 is a view illustrating a display example of the setting table 392 of the input variable designated as "no 3D arrangement" of the embodiment.
Fig. 19 is a view schematically illustrating an IO stub implementation method (1) of the embodiment.
Fig. 20 is a view schematically illustrating an IO stub implementation method (2) of the embodiment.
Fig. 21 is a view schematically illustrating an IO stub implementation method (3) of the embodiment.

### DESCRIPTION OF EMBODIMENTS

An embodiment of the present disclosure will be described in detail with reference to the drawings. The same or equivalent portion in the drawings is denoted by the same reference numeral, and the description will not be repeated.

### <A. Application example>

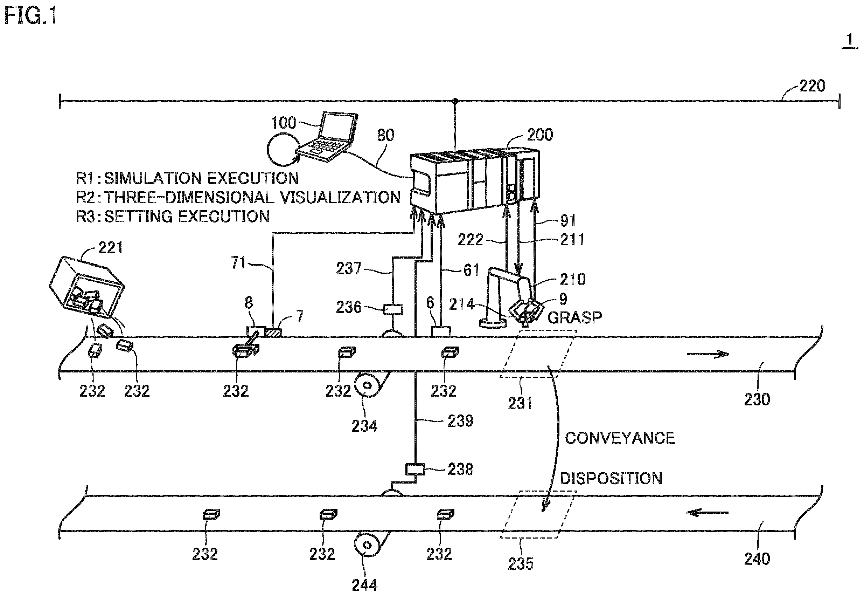

An example of a scene to which the present invention is applied will be described. With reference to Fig. 1, an example of a control system to which the simulation device of the embodiment is applied will be described. The simulation device of the embodiment estimates a behavior of a drive device driving a plurality of machines that is a control target provided in an FA production line. A system including a conveyor having a conveyance surface that continuously moves a disposed target and a processing device that grips the target to dispose the target on the conveyance surface is exemplified as the control target. A movable conveyor is exemplified as the conveyer. For example, a robot that moves while gripping the target on a conveyor is exemplified as the processing device. However, a system and a device of the control target are not limited to the robot, but can be appropriately selected according to FA of the target.

In the following description, a "workpiece" handled by the system may be any product such as a final product or a part thereof, or an intermediate product or a part thereof as long as a position thereof can be tracked.

Fig. 1 is a schematic diagram illustrating a configuration example of a control system 1 that is a simulation target of the embodiment. Referring to Fig. 1, as an example, control system 1 includes a control device 200 typically implemented using a programmable controller (hereinafter, also referred to as "PLC"). Control device 200 connects a simulation device 100 through a communication cable 80, but the connection mode is not limited thereto, and for example, simulation device 100 may be connected through a network 220 of an FA system including control system 1. In addition, simulation device 100 is detachably connected to control device 200.

Simulation device 100 is a device that supports preparation required for controlling the target by control device 200. Specifically, simulation device 100 estimates the behavior of control system 1 by executing the simulation program and outputs a simulation result. In addition, simulation device 100 provides an environment in which a setting operation related to the IO data by the user is supported as an environment in which the user is supported to execute the simulation program. Simulation device 100 can further provide a setting environment related to a task executed by control device 200, a monitor screen of an execution status of the task in control device 200, and the like.

In the following description, the IO data includes data referred to by the simulation program during the execution of the simulation program.

Control device 200 controls the operation of control system 1. In the embodiment, for example, the operation controlled by control device 200 includes a "pick and place operation". The "pick and place operation" represents a series of operations of gripping, conveying, and disposing by a robot 210, in which when a workpiece 232 conveyed on a conveyor 230 reaches a predetermined tracking area 231, robot 201 grips workpiece 232 in tracking area 231, conveys gripped workpiece 232 to a conveyor 240, and disposes workpiece 232 in a tracking area 235 on conveyor 240. In the embodiment, for example, a suction mechanism is used to grip workpiece 232. A robot tool for sucking workpiece 232 is attached to a distal end of a robot arm 214 of robot 210. For example, the robot tool is a pneumatic suction device, and grips workpiece 232 by generating negative pressure. For example, robot 210 grips workpiece 232 on the conveyance surface of conveyor 230 and releases the suction of workpiece 232 by the robot tool above the conveyance surface of conveyor 240 on a place side. The workpiece lands on the conveyance surface of conveyor 240 by gravity and is conveyed as it is.

Control system 1 further connects a peripheral device that executes operation related to the operation of control device 200. For example, the peripheral device includes an air cylinder 8 installed in association with conveyor 230. Control system 1 further connects an IO device that executes a detection operation for control. The IO devices include a sensor 6, a limit switch 7 associated with air cylinder 8, an encoder 236 installed in association with conveyor 230, an encoder 238 installed in association with conveyor 240, a pressure switch 9 installed in association with robot arm 214, and the like.

Encoder 236 outputs a detection value 237 corresponding to a movement amount of conveyor 230 by detecting a rotation amount of a drive roller 234 of conveyor 230, and similarly encoder 238 outputs a detection value 239 corresponding to a movement amount of conveyor 240 by detecting a rotation amount of a drive roller 244 of conveyor 240. Detection values 237, 239 are based on a pulse signal corresponding to the movement amount of the conveyor. Control device 200 counts a pulse indicated by detection value 237, calculates (detects) the value indicating the moving amount and/or the value indicating a moving speed of conveyor 230 based on the count value, similarly counts the pulse indicated by detection value 239, and calculates (detects) the value indicating the moving amount and/or the value indicating the moving speed of conveyor 240 based on the count value.

Pressure switch 9 detects the suction and the subsequent suction release according to a change in pressure applied to robot arm 214, and outputs a detection value 91.

From a box 221 provided on the downstream side of conveyor 230, workpiece 232 is supplied onto the conveyance surface of conveyor 230 through an opening of box 221. When workpiece 232 in the middle of conveyance on conveyor 230 reaches the position where air cylinder 8 is disposed, workpiece 232 is disposed at a predetermined position in a width direction of the conveyance surface of conveyor 230 by retracting or extrusion operation of a piston of air cylinder 8. For example, the predetermined position is based on a position where robot arm 214 of robot 210 can grip workpiece 232. Limit switch 7 outputs a detection value 71 that changes from OFF to ON when the position of air cylinder 8 becomes a retracting or extrusion position. Sensor 6 has a detection range in which workpiece 232 can be detected, and outputs a detection value 61 when detecting workpiece 232. The detection range of sensor 6 is based on a range in which sensor 6 can detect that workpiece 232 in the middle of conveyance approaches tracking area 231.

Control device 200 causes robot 210 to execute the pick and place operation by referring to the detection values from the IO devices to execute a predetermined control program. Specifically, when detecting that workpiece 232 approaches tracking area 231 from detection value 61 of sensor 6, control device 200 outputs a control instruction 211 to execute the "pick and place operation" to robot 210. When generating control instruction 211 for robot 210, control device 200 refers to a state value 222 of robot 210 in addition to detection values 61, 71, 91 from the IO devices described above.

When control system 1 that enables the "pick and place operation" as illustrated in Fig. 1 is introduced, there is a need to evaluate previously whether the control program normally operates by the simulation. That is, due to cost or time constraint, it is often impossible to actually assemble control system 1 by actually connecting all the above-described IO devices to control device 200 and cause control system 1 to execute the control program. The simulation device of the embodiment is applied to control system 1 to cope with a need to more easily estimate the operation of control system 1 without actually connecting the IO device. For this reason, simulation device 100 of the embodiment is configured to more efficiently implement the setting simulating control system 1 including the IO device.

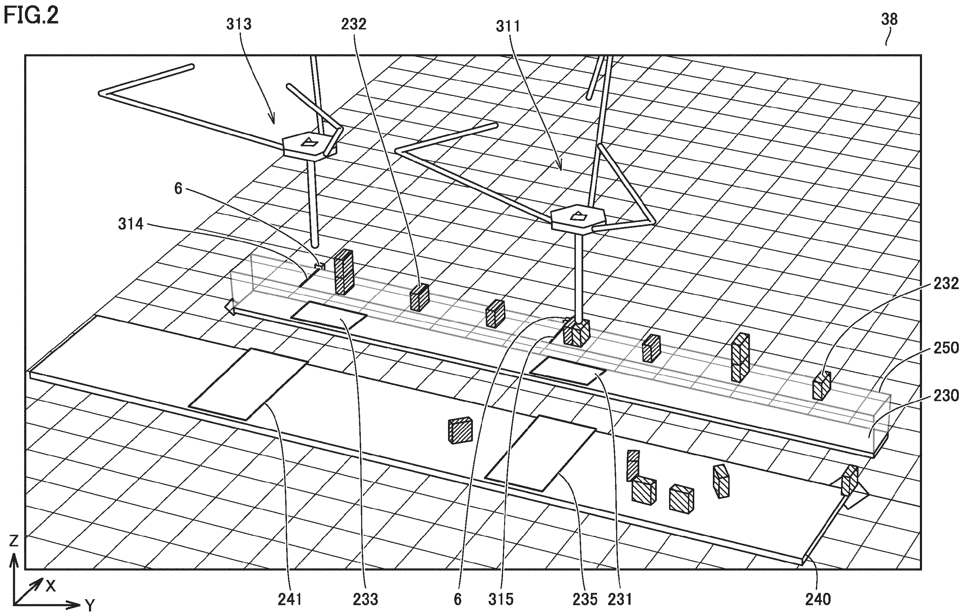

Specifically, simulation device 100 estimates the behavior of control system 1 including control device 200 that controls the target (that is, conveyor 230, 240, robot 210, peripheral devices, and the like). Simulation device 100 executes the simulation program estimating the behavior of control system 1 in what is called an offline state in which communication with each unit of control system 1 including the control device 200 is not conducted (R1). As a typical use case, the simulation program is executed in a situation where the control system cannot be actually assembled. When the simulation program is executed, simulation device 100 virtually constructs the system in the three-dimensional virtual space (R2), and generates drawing data drawing the motion of control system 1 estimated by the simulation in the constructed three-dimensional virtual space on a display 38 as illustrated in Fig. 2 (described later).

Simulation device 100 executes the setting in order to generate or update data to be referred to during the execution of the simulation program (R3). In this setting, the setting based on the position in the three-dimensional virtual space or the setting based on the operation condition is selectively executed according to the user operation for the simulation device.

For example, the selective setting is executed based on the type of the IO device that supplies the data. For example, the setting based on the IO device including sensor 6 such as a photoelectric sensor that detects workpiece 232 is executed. For example, an IO stub that outputs the data associated with an object such as an image representing a detection range related to a sensor set in the three-dimensional virtual space is executed when the simulation program is executed. The IO stub includes a program or an instruction code. For example, the data associated with the object includes data indicating whether workpiece 232 is detected in the detection range. Thus, when the simulation program is executed, the data to be referred to by the simulation program, for example, the data from sensor 6 that detects workpiece 232 can be generated or updated.

On the other hand, limit switch 7 that is an example of the IO device is linked with the operation of air cylinder 8 that is the peripheral device. Accordingly, the setting is executed based on the IO device of limit switch 7. For example, the IO stub is executed based on the operation condition representing the link. Because the IO stub is also executed during the execution of the simulation program, the data to be referred to by the simulation program, for example, the data from limit switch 7 linked with the operation of air cylinder 8 can be generated or updated during the execution of the simulation program.

### <B. Visualization of three-dimensional virtual space>

Fig. 2 is a view illustrating an example in which a system model constructed in a three-dimensional virtual space by simulation device 100 of the embodiment is visualized. Simulation device 100 of the embodiment includes a display 38 to be described later, and displays an image of a model in a three-dimensional space of an X-axis, a Y-axis, and a Z-axis that are orthogonal to display 38.

Referring to Fig. 2, in the three-dimensional virtual space, conveyor 230 that conveys workpiece 232 to be gripped (picked) and conveyor 240 that conveys disposed (placed) workpiece 232 are disposed in parallel. Then, two robots 311, 313 corresponding to robot 210 are disposed in association with conveyors 230, 240. In the system model of the three-dimensional virtual space, workpiece 232 is conveyed by conveyor 230 from the left side of the paper surface to the right side of the paper surface. When workpiece 232 arrives at previously-set tracking area 231 or tracking area 233, robot 311 or 313 grips arrived workpiece 232 and disposes (places) workpiece 232 on conveyor 240. Robots 311, 313 dispose workpiece 232 in tracking areas 235, 241 set in association with conveyor 240. Workpiece 232 conveyed on the conveyance surface of conveyor 230 faces a random direction, but it is assumed that workpiece 232 is aligned in a previously-set direction when disposed on conveyor 240.

In the three-dimensional virtual space of Fig. 2, a translucent (colored with a predetermined transmittance) object 250 is superimposed and displayed on the upper side of conveyor 230 in order to indicate the tracking area. Sensor 6 and the object in detection ranges 314, 315 of sensor 6 are also disposed in association with object 250. By displaying the object 250, the user can grasp at a glance which ranges the tracking area and detection ranges 314, 315 are set in the model of the control system. Object 250 in Fig. 2 can be hidden according to the user operation.

The three-dimensional virtual space of Fig. 2 further includes an object representing sensor 6 and an object representing detection ranges 314, 315 in association with the sensor object.

### <C. Configuration of system>

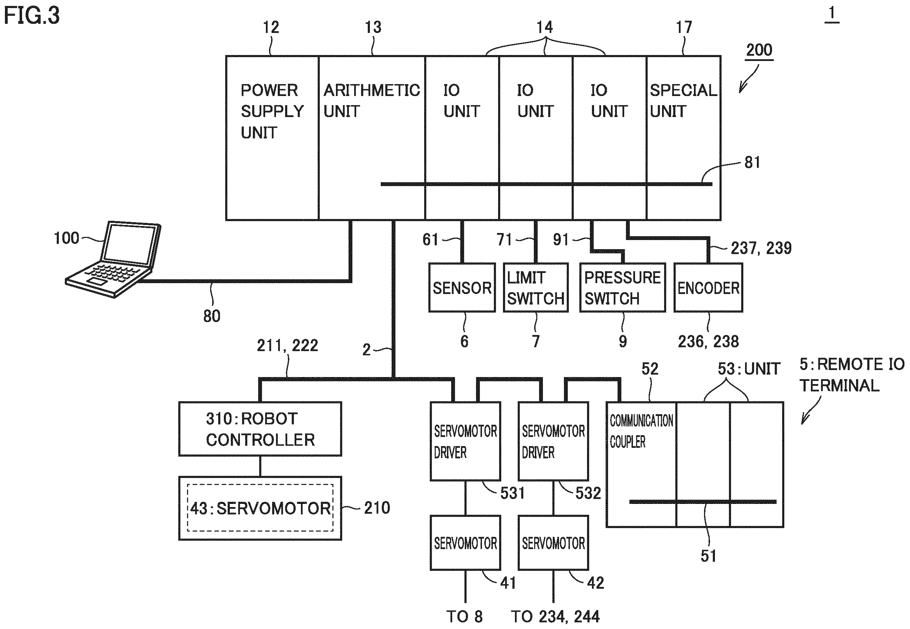

Fig. 3 is a schematic diagram illustrating an example of a unit configuration of control system 1 according to the embodiment. Referring to Fig. 3, control system 1 includes control device 200, servo motor drivers 531, 532 and a remote IO terminal 5 that are connected to control device 200 through a field network 2, robot 210, and the IO device provided in a field, for example, sensor 6, limit switch 7, pressure switch 9, and encoders 236, 238.

Control device 200 includes an arithmetic unit 13 that executes main arithmetic processing, at least one IO unit 14, and a special unit 17. These units are configured to be able to exchange data with each other through a system bus 81, and power is supplied from a power supply unit 12. Simulation device 100 is connected to arithmetic unit 13.

IO unit 14 is a unit related to general input and output processing, and manages the input and output of binarized data. Specifically, IO unit 14 collects the detection values such as detection values 61, 71, 91, 237, 239 from the IO devices including sensor 6, limit switch 7, pressure switch 9, encoders 236, 238, and the like. In the collection, the detection value from each IO device is set (written) to, for example, the corresponding bit of the memory included in IO unit 14. Arithmetic unit 13 executes the arithmetic operation of the control program using the value collected by IO unit 14, and sets (writes) the value of the arithmetic result to the corresponding bit of IO unit 14. The peripheral device or the IO device operates by referring to the value of each bit of IO unit 14. As described above, control device 200 can control robot 210 or conveyors 230, 240 as the control target while exchanging the data with the IO device and the peripheral device through IO unit 14.

Special unit 17 has functions, such as the input and output of analog data, temperature control, and communication by a specific communication method, which are not supported by IO unit 14.

Field network 2 transmits various data exchanged with arithmetic unit 13. Typically, various kinds of industrial Ethernet (registered trademark) can be used as field network 2. For example, EtherCAT (registered trademark), Profinet IRT, MECHATROLINK (registered trademark)-III, Powerlink, SERCOS (registered trademark)-III, and CIP Motion are known as Industrial Ethernet (registered trademark), and any of these may be adopted. Furthermore, a field network other than Industrial Ethernet (registered trademark) may be used. For example, when motion control is not performed, DeviceNet, and CompoNet/IP (registered trademark) may be used.

Remote IO terminal 5 is further connected to field network 2. Basically, remote IO terminal 5 executes the processing related to the general input and output processing similarly to IO unit 14. More specifically, remote IO terminal 5 includes a communication coupler 52 performing processing related to data transmission in field network 2 and at least one IO units 53. These units are configured to be able to exchange the data with each other through a remote IO terminal bus 51.

Servomotor drivers 531, 532 are connected to arithmetic unit 13 through field network 2, and drives servomotors 41, 42 according to an instruction value from arithmetic unit 13. Servomotors 41, 42 control a servo mechanism included in air cylinder 8 and drive rollers 234, 244. Specifically, servo motor drivers 531, 532 receive instruction values such as a position instruction value, a speed instruction value, and a torque instruction value from control device 200 in a constant period such as a control period. In addition, servomotor drivers 531, 532 acquires actual measurement values related to the operations of servomotors 41, 42, such as the position, the speed, and the torque, from a detector such as a position sensor (rotary encoder) or a torque sensor connected to shafts of servomotors 41, 42, and adjusts current in order to drive servomotors 41, 42. Limit switch 7 that is one of the IO devices described above corresponds to the position sensor connected to the shaft of servomotor 41 of air cylinder 8.

### (c1. Cooperation between robot and conveyor)

In control system 1, robot 210 and conveyors 230, 240 move workpiece 232 in cooperation with each other. At this point, in order to simplify the description, the movement of workpiece 232 will be described, but the description is not limited to the movement. For example, machining of workpiece 232 by robot 210 on the stage may be performed.

In Fig. 3, a servomotor 43 provided in robot 210 and a robot controller 310 that drives servomotor 43 are illustrated as an example of the drive device of robot 210. When robot 210 is driven, the behavior of robot 210 changes in the three-dimensional space of the X-axis, the Y-axis, and the Z-axis that are orthogonal to each other. By driving conveyors 230, 240, the behavior of conveyors 230, 240 is defined in the same three-dimensional space as robot 210, and in particular defined in the plane of the X-axis and the Y-axis.

Robot controller 310 drives servomotor 43 of robot 210. An encoder (not illustrated) is disposed on a rotation shaft of servomotor 43. The encoder outputs data corresponding to state value 222 such as the position (rotation angle), the rotation speed, and the cumulative rotation speed of the servomotor to robot controller 310 as a feedback value of servomotor 43.

Similarly, servomotor driver 532 drives servomotor 42 of conveyors 230, 240. Encoder 236, 238 disposed on the rotation shaft of servomotor 42 outputs detection values 237, 239 as a feedback value of servomotor 42.

The control of robot 210 and conveyors 230, 240 in control system 1 will be described. Robot 210 has a movable unit movable by a plurality of drive shafts. Each of these drive shafts is driven by servomotor 43. Specifically, robot 210 includes a plurality of robot arms 214 driven by rotation of servomotor 43. Servomotor 43 rotates to drive robot arm 214. Robot controller 310 controls the drive of servomotor 43, so that robot arm 214 moves three-dimensionally. The movement of robot arm 214 implements the motion of robot 210. Similarly, conveyors 230, 240 also move by the rotation of servomotor 42. The movement amount (direction of movement, movement distance) of robot 210 or conveyors 230, 240 is determined by the rotation amount (direction of rotation, angle) of the servo motor.

In the embodiment, virtual axes are associated with robot arm 214 of robot 210, and the motion of robot 210 is determined from the position of the corresponding axis. Control device 200 stores the target position of the axis of robot 210. This target position changes in time series such that the motion of robot 210 indicates a target motion (hereinafter, also referred to as a target operation).

Robot controller 310 receives control instruction 211 of the target position from control device 200, determines the rotation amount of each servomotor based on the received target position, and outputs the instruction value designating the determined rotation amount to servomotor 43.

In addition, control device 200 calculates the position in the three-dimensional virtual space of the axis corresponding to each robot arm 214 of robot 210 from state value 222 from robot controller 310. Thus, for example, a three-dimensional coordinate P (x, y, z) that is the position in the three-dimensional virtual space of the axis of robot arm 214 that grips workpiece 232 can be calculated.

Similarly to robot 210, conveyors 230, 240 can change the moving speeds of conveyors 230, 240 such that the motion of conveyors 230, 240 indicates the target operation (for example, the moving speed).

Control device 200 can convert the position (tracking position) that changes in time series of workpiece 232 on the conveyor into a three-dimensional coordinate Q (x, y, 0) in the same three-dimensional virtual space as robot 210 by performing the arithmetic operation using a predetermined function on detection values 237, 239 of encoders 236, 238. The time-series change in the three-dimensional coordinates Q (x, y, 0) can indicate the motion of workpiece 232 in the three-dimensional virtual space.

At this point, because conveyors 230, 240 indicate the motion in a plane, the z-axis of the three-dimensional coordinate Q is fixed at a value of zero, but may have another fixed value.

### <D. Configuration of simulation device 100>

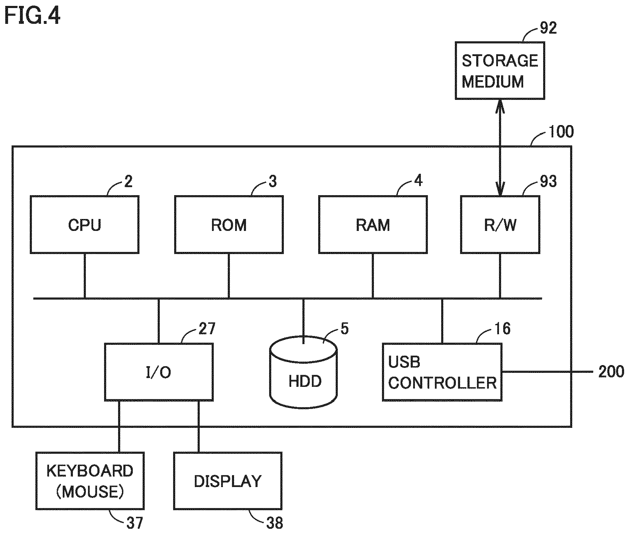

Fig. 4 is a view schematically illustrating a configuration of simulation device 100 of the embodiment. In control system 1 of Fig. 1, when an environment in which robot 210 and conveyors 230, 240 are controlled by control device 200 as the actual machines is set online, simulation device 100 of Fig. 4 simulates control system 1 offline.

Simulation device 100 is a computer system that includes a central processing unit (CPU) 2 and a storage that stores a program and data, and operates according to the program. The storage includes a read only memory (ROM) 3, a random access memory (RAM) 4, and a hard disk drive (HDD) 5. Simulation device 100 further includes a universal serial bus (USB) controller 16 and an input and output (I/O) interface 27. In addition, simulation device 100 includes a keyboard 37 and a display 38. Keyboard 37 receives input including an instruction from the user to simulation device 100. In order to receive the input, simulation device 100 may include another device such as a mouse. Simulation device 100 includes a reader and writer (R/W) device 93 to which an external storage medium 92 is detachably attached, R/W device 93 reading and writing a program and/or data from and to attached storage medium 92.

A USB controller 16 is an interface to which simulation device 100 communicates with an external device including control device 200. For example, USB controller 16 is configured to be connectable to a communication cable 80.

An I/O interface 27 is an interface input to simulation device 100 or output from simulation device 100. As illustrated in Fig. 4, I/O interface 27 is connected to keyboard 37 and display 38, receives information input to keyboard 37 by user, and outputs a processing result of simulation device 100 to display 38. Display 38 includes a liquid crystal display (LCD) or an organic electro luminescence (EL), and displays a video or an image according to a video signal or an image signal output from simulation device 10.

### <E. Offline System>

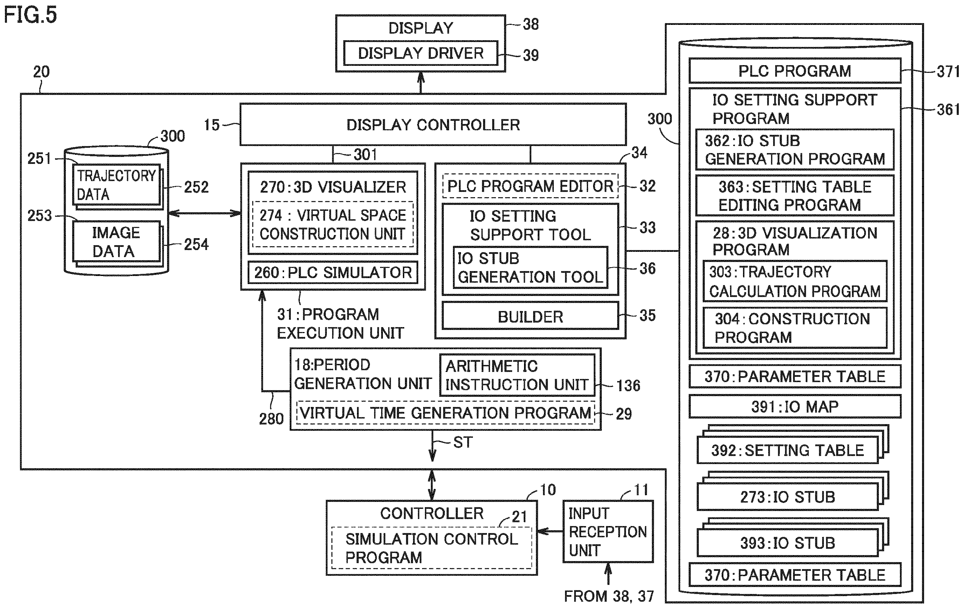

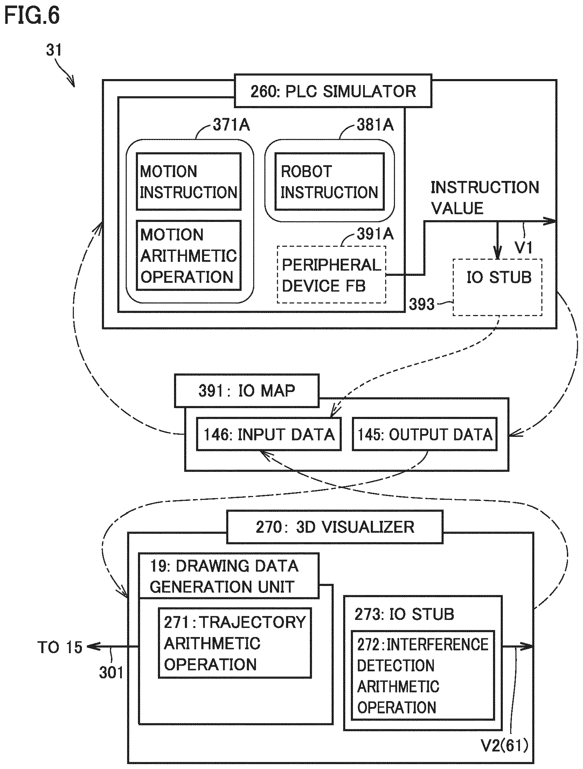

Fig. 5 is a view schematically illustrating a configuration of an offline system 20 of the embodiment. Fig. 6 is a view schematically illustrating a configuration example of a program execution unit 31 in Fig. 5. The offline system 20 provides an environment, a tool, and the like in order to implement the simulation of control system 1. In this simulation, a plurality of instructions included in the control program of robot 210 and conveyors 230, 240 are executed by the simulator, whereby the behavior of the servomotor that drives robot 210 and conveyors 230, 240, namely, the behavior of control system 1 including control device 200 is estimated.

With reference to Fig. 5, the configuration example of offline system 20 will be described in association with a peripheral unit of offline system 20. Referring to Fig. 5, simulation device 100 includes a controller 10 that controls each unit of simulation device 100, an input reception unit 11 that receives a user's operation with respect to simulation device 100, and offline system 20. A display 38 is connected to offline system 20. Display 38 includes a display driver 39 that generates image data to be displayed according to the display control data and drives display 38 according to the image data. Input reception unit 11 receives the user input by the operation of keyboard 37 or the operation of an icon or the like displayed on display 38. CPU 2 executes simulation control program 21 to implement controller 10. Controller 10 controls offline system 20 according to the user instruction received through input reception unit 11.

Offline system 20 includes a program and data, and CPU 2 executes the program according to the instruction from controller 10, thereby implementing offline system 20. Furthermore, when the result of the processing by offline system 20 is displayed on display 38, the processing result is converted into display control data and output to display driver 39. Display driver 39 drives display 38 according to the image data according to the display control data. Thus, the images representing the processing results of simulation device 100 and offline system 20 are displayed on the screen of display 38.

### (e1. Configuration of offline system 20)

A configuration of offline system 20 will be described. The program and data implementing each unit of offline system 20 are stored in a storage 300 including, for example, ROM 3, RAM 4, and HDD 5. Controller 10 (CPU 2) may execute a necessary program to execute processing of offline system 20 including the simulation. The program may be stored in storage 300. When controller 10 executes the necessary program, the target program stored in storage 300 is developed in RAM 4. The program developed in RAM 4 is interpreted and executed by CPU 2, and each component of offline system 20 is controlled.

Referring to Fig. 5, offline system 20 includes a program execution unit 31 that is a main constituent executing a PLC simulator 260 and a three-dimensional (3D) visualizer 270. In the embodiment, PLC simulator 260 includes the simulator of robot 210. For example, these are provided as a program module.

Offline system 20 further includes a display controller 15 that generates the display control data, a period generation unit 18 including a timer that outputs a virtual time, and a tool execution unit 34. Display controller 15 generates the display control data from drawing data or the like, and outputs the display control data to display driver 39. Display driver 39 drives display 38 according to the display control data. Thus, an image according to the drawing data is displayed on the screen.

Period generation unit 18 includes a virtual time generation program 29 that generates a signal ST indicating the virtual time to output generated signal ST to each unit of offline system 20. Each unit operates in synchronization with a period in which the virtual time indicated by signal ST is used as a scale. In the embodiment, the period in which the virtual time is used as the scale includes the control period that is an execution period of PLC simulator 260. Period generation unit 18 includes an arithmetic instruction unit 136 that generates an arithmetic instruction 280 according to the instruction from controller 10 and outputs the arithmetic instruction 280 to program execution unit 31.

With reference to Fig. 5, offline system 20 includes trajectory data 251, 252 and image data 253, 254 in association with a 3D visualizer 270. Offline system 20 further includes a parameter table 370, a PLC program 371 that is a control program of robot 210 and conveyors 230, 240, an IO setting support program 361, a 3D visualization program 28, an IO map 391, at least one setting table 392, and at least one IO stubs 393, 273. IO stub 393 includes a program setting an operation condition of the IO device in the PLC simulator 260. IO stub 273 includes a program setting an operating condition of the IO device in the 3D visualizer 270. These data and programs are stored in storage 300 such as ROM 3, RAM 4, and HDD 5.

IO setting support program 361 is a program supporting the setting by the user regarding the data referred to during the simulation executed by program execution unit 31, and includes an IO stub generation program 362 and a setting table editing program 363. 3D visualization program 28 includes a trajectory calculation program 303 that calculates a trajectory of the movement of the object in the three-dimensional virtual space. Parameter table 370 has a parameter indicating a specification of the operation of each device for the device including the peripheral device controlled by PLC program 371.

Tool execution unit 34 includes a PLC program editor 32, an IO setting support tool 33 including an IO stub generation tool 36, and a builder 35. PLC program editor 32 supports the user to edit the program by editing the PLC program 371 according to the user operation received through the input reception unit 11.

PLC program 371 of the embodiment is what is called a variable program. That is, PLC program 371 is configured such that input data, output data, internal calculation data, and the like referred to by the program during the execution can be utilized using an input variable, an output variable, a temporary variable, and the like for each data. The values of the input variable and the output variable include a value corresponding to each bit of IO unit 14.

IO setting support tool 33 supports the user to perform the setting by performing the setting generating or updating the data referred to during the execution of the program by program execution unit 31 according to the user operation received through input reception unit 11.

Builder 35 builds PLC program 371,10 setting support program 361, and 3D visualization program 28, thereby generating PLC simulator 260, IO setting support tool 33, and 3D visualizer 270 that are constructed with an executable code. When building PLC program 371, builder 35 incorporates and builds IO stub 393 associated with PLC program 371 to generate PLC simulator 260. When building 3D visualization program 28, builder 35 generates 3D visualizer 270 by incorporating and building the IO stubs 273 associated with 3D visualization program 28.

The environment for the support provided by IO setting support tool 33 described above, IO map 391 that can be provided or set through IO setting support tool 33, setting table 392, and the like will be described later.

Offline system 20 in Fig. 5 can provide the environment for supporting the user setting of the IO data and the environment for visualizing the behavior of control system 1 including the device estimated by the simulation in the three-dimensional virtual space.

### (e2. Simulation by program execution unit)

Program execution unit 31 corresponds to the main constituent that executes PLC simulator 260 and 3D visualizer 270, namely, an execution engine. Referring to Fig. 6, program execution unit 31 includes a PLC simulator 260 that simulates the control programs of control device 200, robot controller 310, and servo motor drivers 531, 532, 3D visualizer 270 that simulates 3D visualization program 28, and IO map 391 corresponding to a shared memory. Data exchange between PLC simulator 260 and 3D visualizer 270 is implemented using IO map 391. Data exchange through IO map 391 corresponds to communication through field network 2 between control device 200 and each device (servo motor drivers 531, 532, robot controller 310) and data exchange through IO unit 14 between control device 200 and the IO device.

PLC simulator 260 is a program estimating the behavior of robot 210 and conveyors 230, 240, and corresponds to a simulation program having the plurality of instructions included in PLC program 371. The plurality of instructions include an instruction group 371A including a motion instruction and a motion arithmetic instruction to control the behavior of conveyors 230, 240 included in PLC program 371, an instruction group 381A including a plurality of robot instructions to control the behavior of robot 210 included in PLC program 371, and an instruction of at least one peripheral device FB (Function Block) 391A generating the control instruction to control the peripheral device. Furthermore, the simulation program of PLC simulator 260 includes an instruction of IO stub 393 associated with peripheral device FB 391A. These instructions include instructions of a different linguistic system, such as instructions in a cyclic-executable language (for example, a ladder language) and instructions of a sequential-executable language (for example, an interpreted language). Program execution unit 31 includes an execution engine capable of executing programs of different languages.

Every time each instruction of PLC simulator 260 is executed based on input data 146 of IO map 391, instruction value V1 for servo motor drivers 531, 532 or robot controller 310 is generated and stored in IO map 391 as output data 145. As described above, input data 146 indicates data referred to (read) by PLC simulator 260 during the execution of the instruction, and output data 145 indicates data in which the execution result of the instruction is set. IO stub 393 includes the instruction code estimating the behavior of the IO device in conjunction with the operation of the peripheral device corresponding to peripheral device FB 391A. IO stub 393 is executed using the execution result (instruction) of the instruction of peripheral device FB 391A, thereby estimating the behavior of the IO device according to the instruction, generating the detection value based on the estimated behavior, and storing the detection value in IO map 391 as input data 146.

3D visualizer 270 includes an instruction group of IO stub 273 estimating drawing data generation unit 19 and the behavior of the IO device. Drawing data generation unit 19 includes a trajectory arithmetic operation 271 calculating the position of robot 210 and the position of the three-dimensional virtual space of conveyors 230, 240 based on output data 145 of IO map 391. IO stub 273 includes an interference detection arithmetic operation 272. When executed, trajectory arithmetic operation 271 detects (calculates) the position of the object in the three-dimensional virtual space. In the embodiment, trajectory arithmetic operation 271 includes an arithmetic instruction calculating the position of the three-dimensional virtual space of workpiece 232 on the conveyance surface of conveyors 230, 240 from the position information of conveyors 230, 240. Trajectory arithmetic operation 271 corresponds to an executable code of trajectory calculation program 303.

Interference detection arithmetic operation 272 of IO stub 273 detects the presence or absence of interference (collision, contact, and the like) between the objects from the position calculated by trajectory arithmetic operation 271. Specifically, interference detection arithmetic operation 272 compares the calculated position of workpiece 232 in the three-dimensional virtual space with the position of detection range 314 of sensor 6, and outputs detection value V2 based on the comparison result. For example, detection value V2 indicates "1" when the comparison result indicates that the position of workpiece 232 is within the detection range 314 (that is, with interference), and indicates "0" when the comparison result does not indicate that the position is within detection range 314 (that is, with no interference.). IO stub 273 sets detection value V2 to input data 146 of IO map 391 as detection value 61 of sensor 6.

In the next period, controller 10 refers to input data 146 including detection value 61 of sensor 6 to execute PLC simulator 260. Thus, in the next period, when sensor 6 detects that workpiece 232 reaches detection range 314, the arithmetic instruction estimating the behavior of the "pick and place operation" is started.

By periodically executing the simulation in this manner, input data 146 of IO map 391 is generated or updated by IO stubs 393, 273.

### (e3. Generation of drawing data)

Drawing data generation unit 19 generates the data of the three-dimensional virtual space as illustrated in Fig. 2 by executing the instruction code virtually constructing control system 1 included in a virtual space construction unit 274 in the three-dimensional virtual space. Virtual space construction unit 274 is implemented by executing a construction program 304. Drawing data generation unit 19 further executes the trajectory arithmetic operation 271 to execute the arithmetic operation using a predetermined function for output data 145. By executing this arithmetic operation, drawing data generation unit 19 calculates the three-dimensional coordinates P (x, y, z) of the position of robot 210 and the three-dimensional coordinates Q (x, y, 0) of the position of workpiece 232, and acquires trajectory data 251, 252 that are time-series data of these positions. As described above, the trajectory data includes information indicating the motion in the three-dimensional virtual space of robot 210 and workpiece 232 estimated by the simulation. Drawing data generation unit 19 generates drawing data 301 in order to three-dimensionally draw the motion of robot 210 in the three-dimensional virtual space according to calculated trajectory data 251, 252 and image data 253, 254 of robot 210 and workpiece 232, and outputs drawing data 301 to display controller 15. Image data 253, 254 representing robot 210 and workpiece 232 include computer-aided design (CAD) data and the like. In the embodiment, drawing data 301 includes an image (object) representing the IO device including conveyors 230, 240 and sensor 6 or the peripheral device, and an image (object) representing detection ranges 314, 315 and the tracking area. The image representing conveyors 230, 240 and the IO device including sensor 6 or the peripheral device may be included in image data 253, 254.

### (e4. Synchronization processing)

Period generation unit 18 executes virtual time generation program 29 that generates signal ST. Period generation unit 18 outputs generated signal ST to other units. Each unit executes the processing or the program in synchronization with the period in which signal ST is output from period generation unit 18. Thus, the processing or the program of each unit of offline system 20 is executed in the period of signal ST or in synchronization with the period. The period of signal ST corresponds to a communication period of field network 2 of control system 1 in Fig. 1. This communication period is synchronized with the control period of control system 1.

### <F. Overall processing of offline system 20>

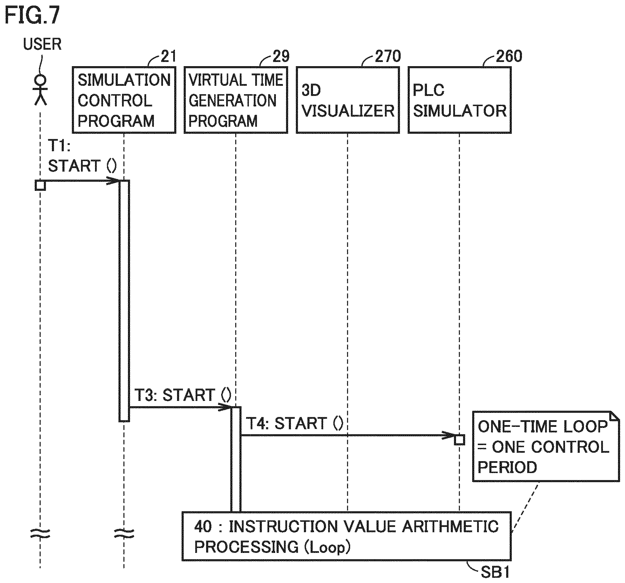

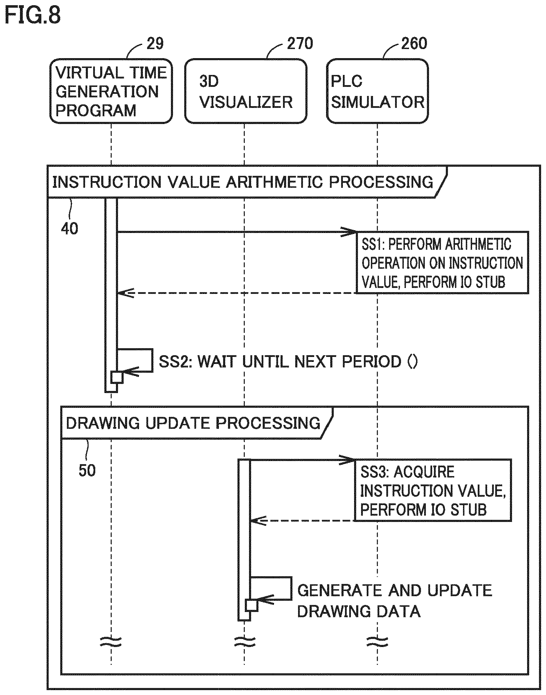

Figs. 7 and 8 are views illustrating the processing of offline system 20 performed by simulation device 100 of the embodiment. In Figs. 7 and 8, the processing of offline system 20 is illustrated in association with a timing chart indicating an input and output relationship of signals between the units.

Referring to Fig. 7, simulation control program 21 of controller 10 is activated when receiving an activation instruction from the user through input reception unit 11 (step T1).

Simulation control program 21 of controller 10 outputs a start instruction to period generation unit 18 (step T3). Period generation unit 18 starts virtual time generation program 29 according to the start instruction. When activated, virtual time generation program 29 starts the output of signal ST and outputs the start instruction to PLC simulator 260 (step T4).

Program execution unit 31 starts PLC simulator 260 according to the start instruction. Thus, instruction value arithmetic processing 40 is performed (repetition processing SB1). Instruction value arithmetic processing 40 calculates the detection value by the calculation of instruction value V1 and the execution of IO stub 393. As indicated by "one-time loop = one control period" in Fig. 7, instruction value arithmetic processing 40 is repeatedly performed (loop) for each control period with the virtual time indicated by signal ST as the scale, and the image of the three-dimensional virtual space as illustrated in Fig. 2 according to drawing data 301 is displayed on the display 38 while being updated at the period synchronized with the control period.

Referring to Fig. 8, in instruction value arithmetic processing 40, period generation unit 18 outputs the arithmetic instruction to program execution unit 31 by virtual time generation program 29. PLC simulator 260 of program execution unit 31 calculates instruction value V1 according to the arithmetic instruction, and stores instruction value V1 in IO map 391 as output data 145 (step SS1). In step S1, IO stub 393 is executed, and the value based on the execution result is stored in IO map 391 as input data 146. When the arithmetic operation is completed by program execution unit 31, virtual time generation program 29 of period generation unit 18 waits until the next control period (step SS2).

In drawing update processing 50, drawing data generation unit 19 generates drawing data 301, and outputs the drawing data to display 38.

At this point, in the embodiment, drawing update processing 50 is performed in the period synchronized with the control period. Furthermore, in the embodiment, 3D visualizer 270 is started independently of (regardless of) the start of simulation control program 21. When receiving a start notification instruction notifying that PLC simulator 260 is started from program execution unit 31, 3D visualizer 270 starts an operation for receiving output data 145 including instruction value V1 from PLC simulator 260 through IO map 391 in order to generate drawing data 301. In addition, when receiving an end instruction notification notifying that PLC simulator 260 ends the simulation from program execution unit 31, 3D visualizer 270 ends the above receiving operation.

Drawing data generation unit 19 acquires instruction value V1 of each axis calculated by PLC simulator 260 from output data 145 of IO map 391 in the period synchronized with the control period based on signal ST (step SS3). Drawing data generation unit 19 calculates trajectory data 251, 252 by executing the trajectory calculation instruction using acquired instruction value VI, and generates the position of each object in the three-dimensional virtual space from calculated trajectory data 251, 252 and image data 253, 254 and drawing data 301 in order to draw the object based on the position. At this point, the interference between the objects in the three-dimensional virtual space is detected by executing IO stub 273 to execute interference detection arithmetic operation 272. For example, the presence or absence of the interference based on the position in the three-dimensional virtual space of the object of workpiece 232 on conveyor 230 and the object of detection ranges 314, 315 of sensor 6 is detected, and IO stub 273 sets detection value 61 (detection value V2) based on the detection result to input data 146 of IO map 391. Drawing data generation unit 19 outputs drawing data 301 to display controller 15 in order to update the image on display 38 (step SS4).

In Figs. 7 and 8, the motions of robot 210 and workpiece 232 represented by drawing data 301 using instruction value V1 of each axis calculated within each period synchronized with the control period are drawn on the screen of display 38. Thus, the user can visually recognize the change amount from the period immediately before the motions of robot 210 and workpiece 232, namely, the movement amount of robot arm 214 of robot 210 or conveyors 230, 240 for each period from the screen of display 38. In addition, in the instruction value arithmetic processing, the arithmetic instruction is executed based on input data 146 (including detection value 61 of the interference) set in the previous control period for each control period, so that the simulation arithmetic operation can be executed based on the detection result of the presence or absence of the interference between the objects in the three-dimensional virtual space. The presence or absence of the interference between the objects indicates whether the position of workpiece 232 exists within the range of detection ranges 314, 315 of sensor 6.

### <G. IO setting support tool>

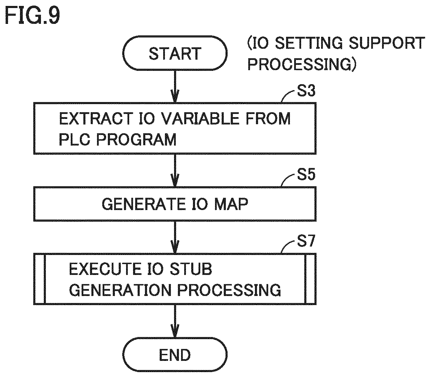

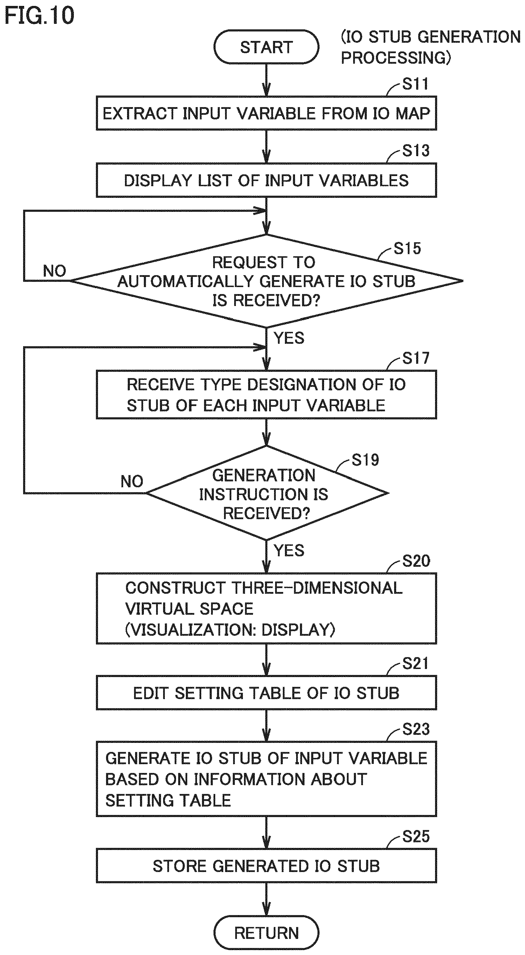

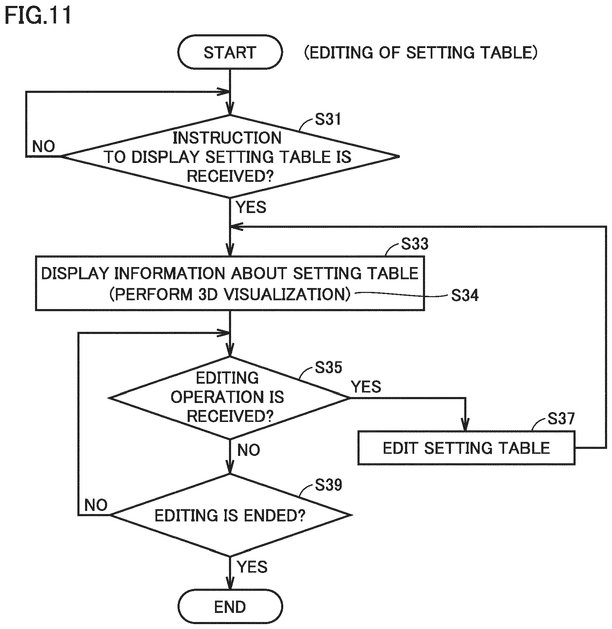

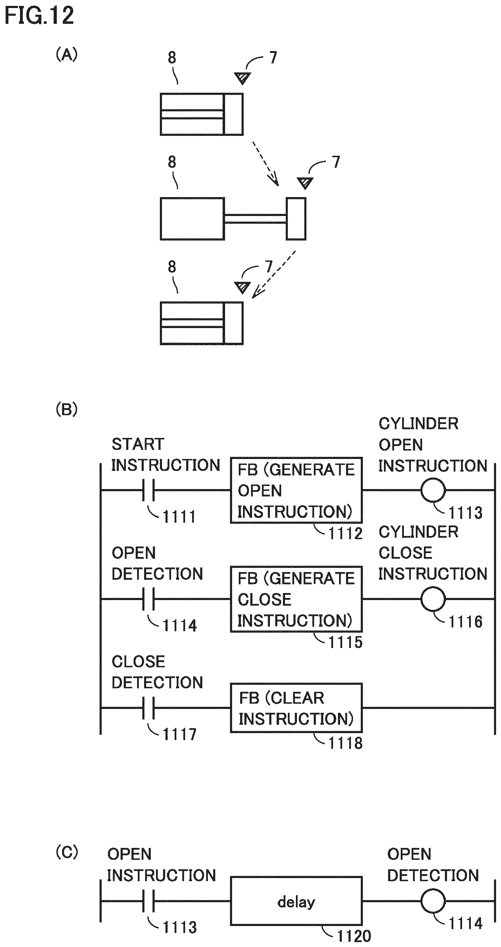

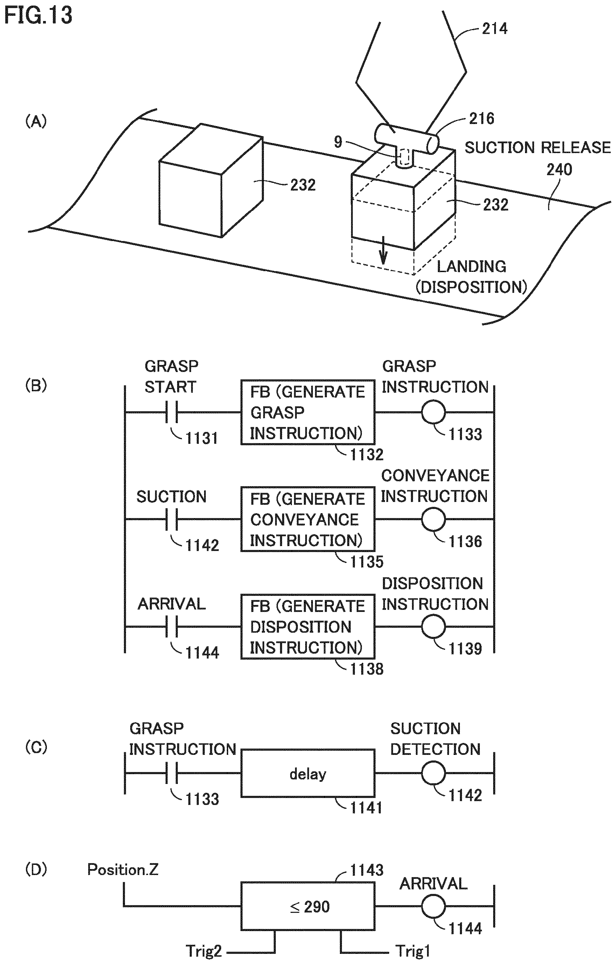

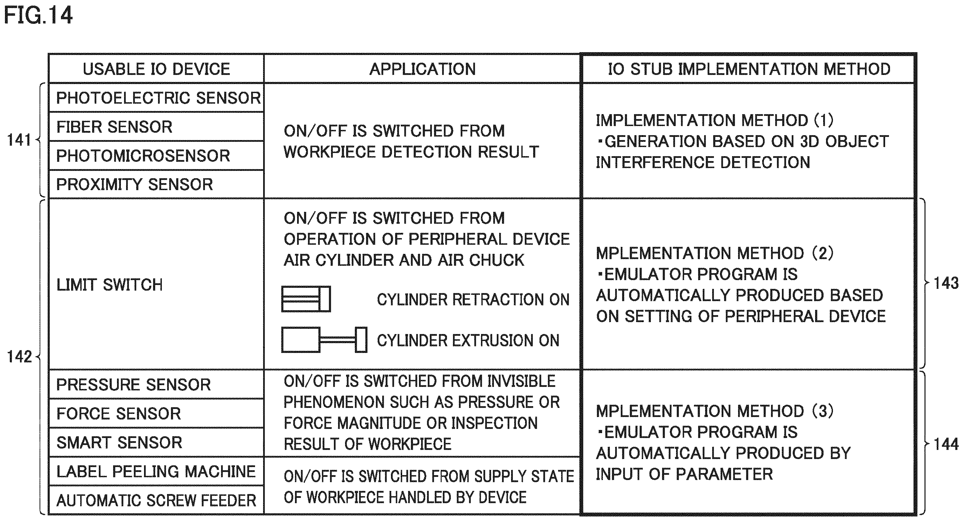

Processing of IO setting support tool 33 of the embodiment will be described. Fig. 9 is a flowchart illustrating an example of schematic processing of the IO setting according to the embodiment. Fig. 10 is a flowchart illustrating an example of IO stub generation processing in Fig. 9. In the processing of Fig. 10, for example, an IO stub in Fig. 12 or 13 as described later is generated. The method for implementing the IO stub differs depending on the type of the IO device as described later with reference to Fig. 14. Fig. 11 is a flowchart illustrating an example of processing for editing a setting table of the embodiment. This editing processing will be described later.

With reference to Fig. 9, schematic processing of IO setting support tool 33 will be described. When receiving the start operation of IO setting support tool 33 through input reception unit 11, controller 10 starts IO setting support tool 33.

When IO setting support tool 33 is started, controller 10 executes IO setting support program 361. When IO setting support program 361 is executed, IO setting support tool 33 analyzes PLC program 371, extracts the IO variable (step S3), generates IO map 391 configured to be able to store the variable name and the data corresponding to each input variable of input data 146 in the extracted IO variables and the variable name and the data corresponding to each output variable of output data 145 in the extracted IO variables, and stores generated IO map 391 (step S5). IO setting support tool 33 starts IO stub generation tool 36 to execute the IO stub generation processing using IO map 391 (step S7). Controller 10 executes IO stub generation program 362 to implement IO stub generation tool 36.

### (g1. IO stub generation processing)

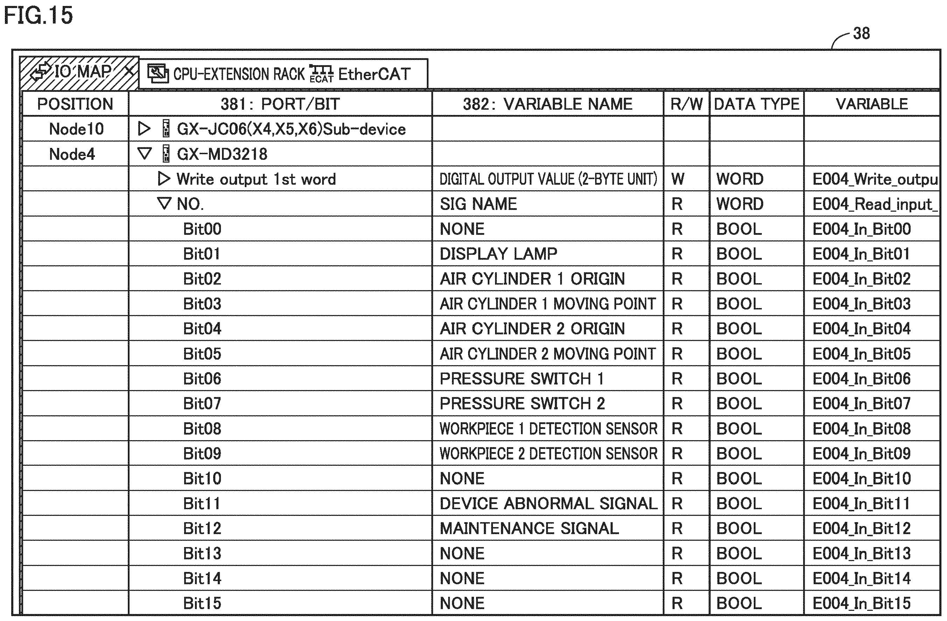

With reference to Fig. 10, the IO stub generation processing (step S7) will be described. Referring to Fig. 10, in the IO stub generation processing, IO stub generation tool 36 generates and stores IO stub 393 in association with the input variable of IO map 391 according to the user operation from input reception unit 11. Specifically, IO stub generation tool 36 extracts a plurality of input variables from IO map 391, produces a list of the extracted input variables, and displays, for example, the list in Fig. 15 on display 38 (steps S11 and S13). Fig. 15 is a view illustrating a display example of the list of the input variables according to the embodiment. Referring to Fig. 15, the list includes a number 381 of a bit in which a value is set and a variable name 382 corresponding to each input variable. Variable name 382 is assigned by a name that uniquely identifies the IO device setting the value (detection value) to the input variable.

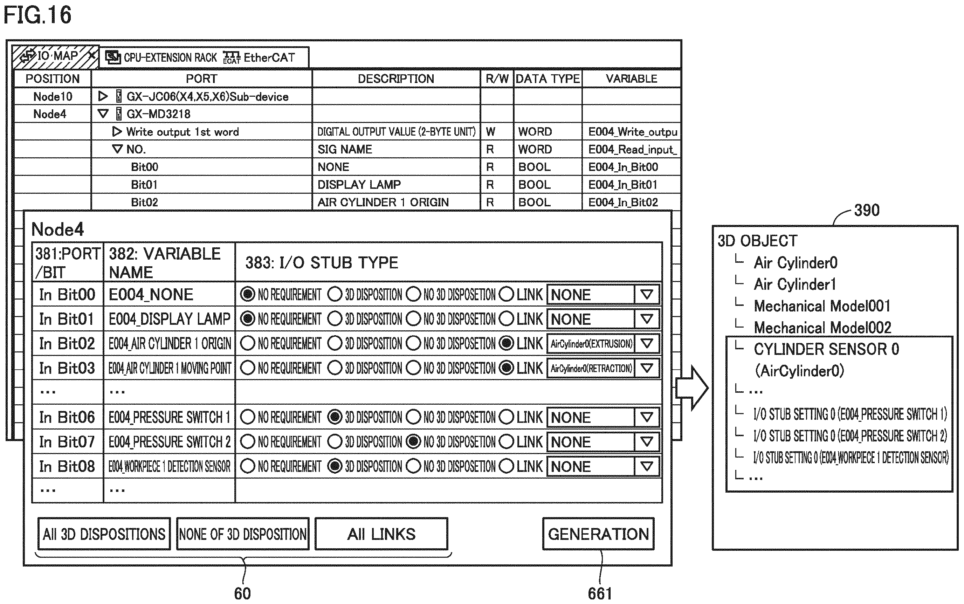

IO stub generation tool 36 determines whether to receive the request for automatic IO stub generation based on the user operation from input reception unit 11 (step S15). When the request is not received (NO in step S15), the processing of step S15 is repeated. When the request is received (YES in step S15), IO stub generation tool 36 switches the screen of display 38 from the list screen in Fig. 15 to the screen in Fig. 16. Fig. 16 is a view illustrating an example of a display screen when the IO stub of the embodiment is automatically generated.

The screen of Fig. 16 is an example of a screen capable of receiving a user operation of an IO stub generation instruction. Fig. 16 illustrates the case where the user selects an input variable generating the IO stub. For example, in Fig. 16, a multibit input variable group corresponding to Node4 is selected from the list in Fig. 15. The selection of the input variable is not limited to the variable group, but can be individually selected for each input variable.

The screen in Fig. 16 includes an IO stub type 383 together with a bit identification number 381 and a variable name 382 corresponding to each variable of the selected input variable group. IO stub type 383 includes an icon operated by the user in order to selectively designate the type of the IO stub of the corresponding input variable. The type of the IO stub includes "no requirement", "3D disposition", "no 3D disposition", and "link". "No requirement" indicates that the IO stub is not generated. "3D disposition" indicates that the IO stub is set in the three-dimensional virtual space. "No 3D disposition" indicates that the IO stub is not set in the three-dimensional virtual space but is set to be executed in association with the control logic of PLC program 371. "Link" indicates that the IO stub is set such that the operation of the IO device corresponding to the input variable is linked with the operation of another peripheral device.

In addition, the screen in Fig. 16 includes an icon 60 receiving the user operation for collectively setting the same type for the input variable group and a button 661 receiving the user operation for instructing the generation of the IO stub according to the set type of the IO stub. For example, each icon on the screen in Fig. 16 includes a radio button or a check box.

An example of a viewlist 390 is further illustrated on the right side of Fig. 16. Viewlist 390 indicates a list of input variable names set on the left screen of Fig. 16.

IO stub generation tool 36 receives the designation of the type of the IO stub of each input variable from the user operation through the icon in Fig. 16 (step S17), and determines whether to receive the IO stub generation instruction through button 661 (step S19). While IO stub generation tool 36 determines that the IO stub generation instruction is not received, namely, button 661 is not operated (NO in step S19), the processing returns to step S17. When IO stub generation tool 36 determines that the IO stub generation instruction is received, namely, button 661 is operated (YES in step S19), the processing proceeds to step S20.

Three-dimensional virtualization processing for virtually constructing control system 1 in the three-dimensional virtual space is executed in step S20. Specifically, 3D visualizer 270 produces the data representing the three-dimensional virtual space in Fig. 2 by virtual space construction unit 274, and displays the image based on drawing data 301 based on the produced data on display 38. Accordingly, the user can perform the operation for generating IO stubs while checking control system 1 visualized in the three-dimensional virtual space.

When determining that button 661 is operated, IO stub generation tool 36 starts setting table editing program 363. Using setting table editing program 363,10 stub generation tool 36 edits setting table 392 according to the user operation, and stores edited setting table 392 (step S21).

IO stub generation tool 36 generates IO stub 393 of the designated input variable based on the information about setting table 392, and stores generated IO stub 393 (steps S23 and S25).

### (g1-1. Exemplary setting table)

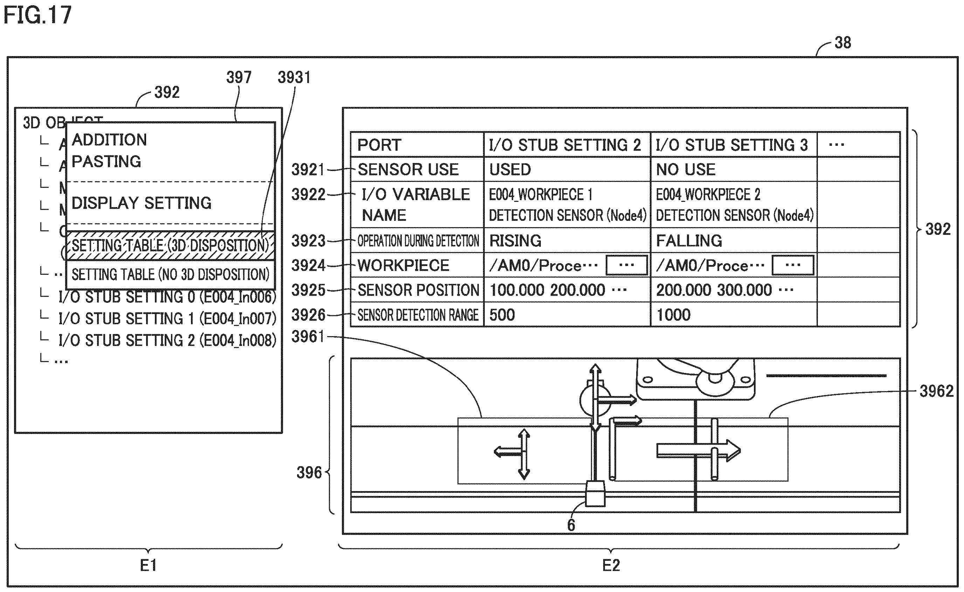

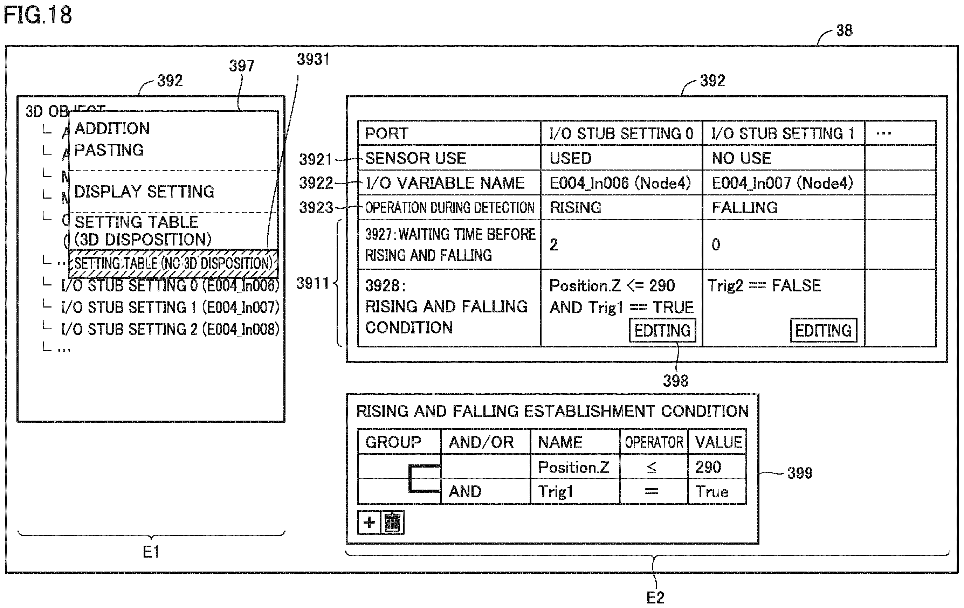

With reference to Figs. 17 and 18, an example of setting table 392 generated in step S21 will be described. Fig. 17 is a view illustrating a display example of setting table 392 of the input variable designated as "3D disposition" of the embodiment. Fig. 18 is a view illustrating a display example of setting table 392 of the input variable designated as "no 3D disposition" of the embodiment.

Referring to Fig. 17,10 stub generation tool 36 displays a menu 397 that is an item list editing the setting table in an area E1 of the screen of display 38, and displays the content of setting table 392 that is the editing target in an area E2 of the same screen.

Menu 397 includes types of a plurality of editing operations (addition, pasting, display setting, and the like) and an identifier (3D disposition, no 3D disposition) of the table of the editing target as items. For example, when the user performs the designation operation on an item 3931 of menu 397,10 stub generation tool 36 receives the designation operation of item 3931, reads setting table 392 of "3D disposition" from the storage based on the received operation, and displays the content of read setting table 392 of "3D disposition" in area E2 of display 38.

For example, setting table 392 in Fig. 17 indicates setting items of parameters of IO stub 273 of input variables of a "workpiece 1 detection sensor" and a "workpiece 2 detection sensor" corresponding to sensor 6. Specifically, the setting items include an item 3921 that designates whether to refer to (use) the input variable of the sensor in PLC simulator 260, a variable name 3922, an operation 3923 during the detection (that is, the value of detection value 61), a type 3924 of workpiece 232 of the detection target, a position 3925 in the three-dimensional virtual space where the sensor is installed, and a detection range 3926 in the three-dimensional virtual space.

IO stub generation tool 36 causes 3D visualizer 270 to generate a 3D image 396 based on the content of the setting item corresponding to each input variable of setting table 392, and causes display 38 to display generated 3D image 396.

In Fig. 17, 3D image 396 is displayed in an area E2 in association with setting table 392. As illustrated in Fig. 17, for example, 3D image 396 includes object images 3961, 3962 representing detection ranges 3926 of the "workpiece 1 detection sensor" and the "workpiece 2 detection sensor". Accordingly, the user can also adjust the setting content such as detection range 3926 of setting table 392 while viewing 3D image 396 of display 38.

Referring to Fig. 18, when the user performs the designation operation on item 3931 of menu 397, IO stub generation tool 36 receives the designation operation of item 3931, reads setting table 392 of "no 3D disposition" from the storage based on the received operation, and displays the read content of setting table 392 in area E2 of display 38.

For example, setting table 392 in Fig. 18 indicates the item of the parameter to be set for IO stubs 393 of the input variables of the two pressure switches corresponding to pressure switch 9. Specifically, the setting items include item 3921 that designates whether to refer to (use) the input variable of the sensor (pressure switch 9) in PLC simulator 260, variable name 3922, operation 3923 during the detection, and an operation condition 3911 in which the IO stub is operated. Operation condition 3911 corresponds to a parameter to be set in IO stub 393. Operation 3923 during the detection indicates detection value 91.

For example, operation condition 3911 has a waiting time 3927 and a detection condition 3928. For example, waiting time 3927 is based on a required time from the start of gripping of workpiece 232 by robot arm 214 to the completion of the suction. Detection condition 3928 includes a parameter value for detecting the suction completion or the suction release and a conditional expression. Detection condition 3928 and the operation of IO stub 393 in Fig. 18 are as follows.

(Position.Z ≤ 290) and (Trig1 = TRUE). A variable Position.Z indicates the position (more specifically, the position of robot arm 214) of robot 210, and a variable Trig1 indicates, for example, an instruction value indicating the start of the gripping. Accordingly, when IO stub 393 of pressure switch 9 is executed and when it is determined that condition 3928 is satisfied, the output (corresponding to detection value 91) indicating arrival (suction release) is derived from IO stub 393 after time indicated by waiting time 3927 elapses.

On the screen in Fig. 18, an editing button 398 operated to edit the content of setting table 392 is displayed. The user can input an editing instruction by operating editing button 398.

### (g1-2. Editing of setting table)

Editing processing when editing button 398 is operated will be described. IO setting support tool 33 provides an environment in which setting table 392 can be edited to the user. With reference to Fig. 11, the setting table editing processing will be described.

IO setting support tool 33 determines whether the instruction to display the setting table is received from the user based on the output of input reception unit 11 (step S31).

While the display instruction is not received (NO in step S31), IO setting support tool 33 repeats the processing in step S31. When determining that the display instruction is received (YES in step S31), IO setting support tool 33 displays setting table 392 of storage 300 on display 38 as illustrated in Fig. 17 or 18 (step S33). In addition, IO setting support tool 33 may control 3D visualizer 270 and display 38 so as to generate and display 3D image 396 that visualizes and presents the setting content based on the content of setting table 392 together with the display of setting table 392 (step S34).

IO setting support tool 33 determines whether the user operates editing button 398 based on the output from input reception unit 11 (step S35). When determining that the operation of editing button 398 is not received (NO in step S35), IO setting support tool 33 determines whether the operation instructing the end of the editing is received from input reception unit 11 (step S39). When determining that the operation instructing the end of the editing is not received (NO in step S39), IO setting support tool 33 returns to the processing of step S35. When determining that the instruction of the editing end is received (YES in step S39), IO setting support tool 33 ends the editing processing.

When determining in step S35 that the operation of editing button 398 by the user is received (YES in step S35), IO setting support tool 33 edits setting table 392 according to the user operation received from input reception unit 11 (step S37). When the editing is performed, the processing returns to step S33, and IO setting support tool 33 displays the content of edited setting table 392. At this point, IO setting support tool 33 may control 3D visualizer 270 and display 38 so as to display 3D image 396 based on the content of edited setting table 392 (step S34).

In step S37, for example, when editing button 398 related to operation condition 3911 is operated by the user, IO setting support tool 33 displays a window 399 in Fig. 18 in order to edit (setting, change) operation condition 3911. Window 399 may be displayed on a screen different from the screen of setting table 392. The user can edit (change) the parameter value or the operator (for example, a logical operator, and an arithmetic operator) of detection condition 3928 by operating the data of window 399.

In Fig. 18, operation condition 3911 is edited according to the operation of editing button 398. However, the editing target is not limited to operation condition 3911, but may be, for example, detection range 3926 in Fig. 17.

### <H. Generation of IO stub>

IO setting support tool 33 executes the setting in order to generate or update the data referred to during the execution of PLC simulator 260. Specifically, in the IO stub generation processing (step S23 in Fig. 10), 10 setting support tool 33 starts IO stub generation tool 36. When IO stub generation tool 36 is started, IO stub generation program 362 is executed to generate IO stubs 273, 393, and generated IO stubs 273, 393 are stored.

Fig. 14 is a view illustrating an example of the IO device of the embodiment and a method for implementing the IO stub for each type of the IO device. The IO devices applied to control system 1 are classified into different groups due to a difference in detection operation, and a method for implementing the IO stubs is different for each group. Referring to Fig. 14, the group includes a first group 141 and a second group 142. The IO device to which corresponding IO stub 273 can be set (generated) based on the position in the three-dimensional virtual space belongs in first group 141. The IO devices of first group 141 include sensor 6 in which the application is, for example, the detection of workpiece 232. Examples of the type of sensor 6 include a photoelectric sensor, a fiber sensor, a photomicrosensor, and a proximity switch.

The IO device that can set (generate) corresponding IO stub 393 based on operation condition 3911 belongs to second group 142. Second group 142 includes a group 143 of the IO devices in which the application is linked with the operation of the peripheral device and a group 144 of other IO devices. For example, group 143 includes air cylinder 8 as the peripheral device and limit switch 7 linked with the operation of an air chuck associated with air cylinder 8.

Group 144 includes the IO device in which the application switches ON and OFF from an invisible phenomena such as pressure or force magnitudes or an inspection result of workpiece 232. Examples of the IO device include pressure switch 9, a force sensor, and a smart sensor. Group 144 may also include the IO device such as a label peeling machine and an automatic screw feeder that switch ON and OFF depending on a supply state of the workpiece handled by the device.

In the embodiment, the IO devices are classified into groups 141, 143, and 144 due to a difference in detection operation, and each of the IO stub implementation methods (1) to (3) is provided for each group. The type of the IO device or the peripheral device belonging to each group is not limited thereto.

### (h-1. IO stub implementation method (1))

A method for implementing IO stub 273 will be described. IO stub 273 can be set (generated) based on the position in the three-dimensional virtual space. Specifically, when IO stub 273 is executed, IO stub 273 performs the setting for generating or updating the data associated with, for example, the object (object in detection ranges 314, 315) corresponding to sensor 6 disposed in the three-dimensional virtual space.

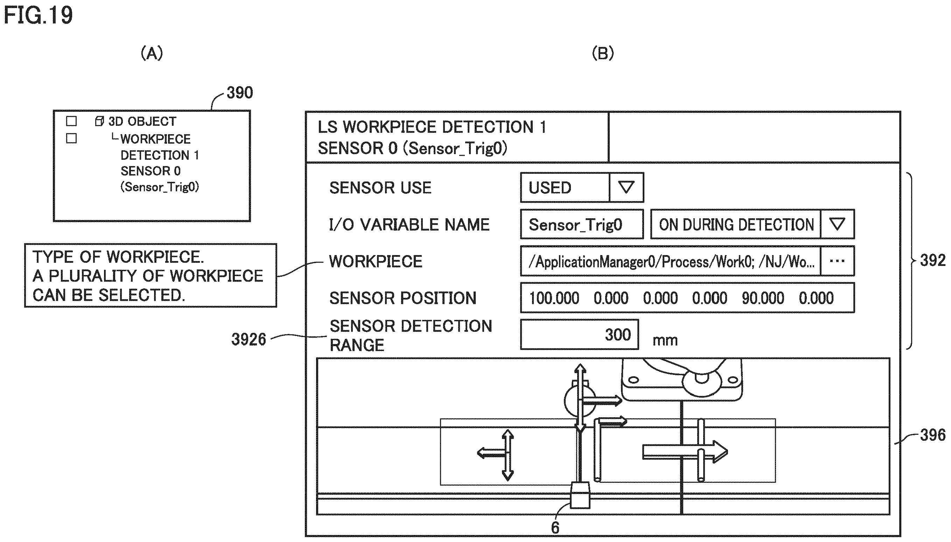

Fig. 19 is a view schematically illustrating an IO stub implementation method (1) of the embodiment. When the user searches viewlist 390 in Fig. 19 (A) and performs the designation operation of the variable name (variable name: workpiece 1 detection sensor) of sensor 6, IO stub generation tool 36 automatically generates IO stub 273 based on the parameter of detection range 3926 of setting table 392 in Fig. 19(B) corresponding to the variable name (variable name: workpiece 1 detection sensor) of sensor 6 designated by the user.

According to setting table 392 in Fig. 19(B), generated IO stub 273 includes the instruction code. This instruction code has a code of "an interference detection arithmetic operation 272 that compares the calculated position of workpiece 232 calculated in the three-dimensional virtual space with the value of detection range 314 of sensor 6, namely, 300 mm that is the parameter of detection range 3926 to output a comparison result and an instruction to output an arithmetic result of the interference detection arithmetic operation 272 as detection value V2". Thus, during the execution of the simulation, when workpiece 232 moves in the three-dimensional virtual space to reach detection range 314 set by the user, namely, when the interference is detected, detection value 61 output by IO stub 273, namely, detection value V2 indicating the presence of the interference is set in input data 146. In the next control period, PLC simulator 260 can start the simulation of the "pick and place operation" according to input data 146 corresponding to detection value 61 indicating the presence of the interference.

### (h-2. IO stub implementation method (2))

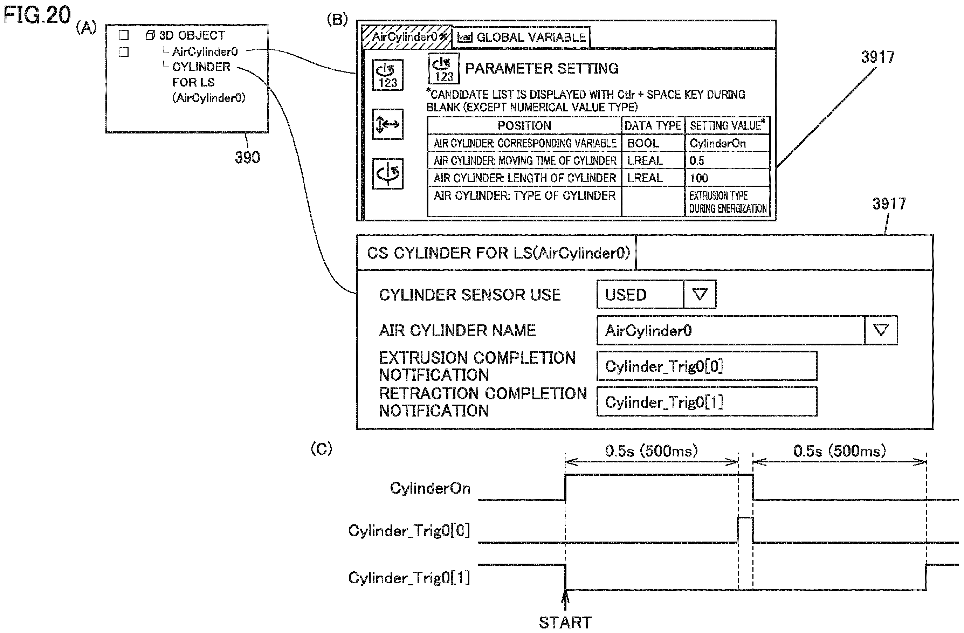

A method for implementing the setting generating or updating the data referred to during the execution of the simulation program by executing the setting based on operation condition 3911 will be described below. Fig. 20 is a view schematically illustrating an IO stub implementation method (2) of the embodiment. The user searches viewlist 390 in Fig. 20(A) and selects air cylinder 8 of the 3D object. IO stub generation tool 36 generates IO stub 393 representing the behavior of limit switch 7 linked with the operation of air cylinder 8 in Fig. 20(C) from a list 3917 of the parameters in Fig. 20(B) representing the specification of the operation of air cylinder 8. Specifically, IO stub generation tool 36 generates list 3917 of the parameters in Fig. 20(B) from parameter table 370. The list of parameters in Fig. 20(B) corresponds to operation condition 3911 of the link between air cylinder 8 and limit switch 7 that are the peripheral devices. The user can edit operation condition 3911 by operating the data in list 3917 of the parameters in Fig. 20(B).

A timing chart in Fig. 20(C) is based on the parameter of moving time of air cylinder 8 indicated by operation condition 3911 in Fig. 20(B). The parameter of the moving time is 0.5 s (500 ms) (0.5 s = 0.5 seconds, 0.5 ms = 500 m seconds). This timing chart indicates that the piston is extruded from the cylinder from the operation start of air cylinder 8 and is completely extruded when 500 ms elapse from the start, and then the piston is retracted into the cylinder and is completely retracted when 500 ms elapse from the retraction start. When generating the IO stub, IO stub generation tool 36 may display the information in Figs. 20(B) and 20(C) on display 38.

An example of IO stub 393 generated by the IO stub implementation method (2) will be described. Fig. 12 is a view illustrating an example of the IO device linked with the operation of the peripheral device of the embodiment. Fig. 12 exemplifies IO stub 393 of limit switch 7 linked with the operation of air cylinder 8. Fig. 12(A) illustrates the operation of air cylinder 8 according to the timing chart of Fig. 20(C). In Fig. 12(A), when the retraction and the extrusion are completed, limit switch 7 outputs detection value 71 indicating the notification of the retraction completion and the extrusion completion.

Fig. 12(B) illustrates an example of a program code including peripheral device FB 391 of air cylinder 8, and Fig. 12(C) illustrates an example of a program code of IO stub 393 of limit switch 7. Referring to Fig. 12(B), at the time of the execution of the simulation, first, an FB 1112 generating an open instruction is executed according to an operation start instruction 1111 of air cylinder 8, and a cylinder open instruction 1113 is output. When receiving cylinder open instruction 1113 during the execution of the simulation, IO stub 393 in Fig. 12(C) executes a delay 1120 counting (waiting) the extrusion time of 500 ms, and then, outputs an open detection 1114 that is the extrusion completion notification. In Fig. 12(B), an FB 1115 that generates the close instruction is executed in response to open detection 1114 from IO stub 273, and a cylinder close instruction 1116 is output. When IO stub 393 of limit switch 7 is executed, although not illustrated, IO stub 393 receives cylinder close instruction 1116, executes the delay counting the retraction time of 500 ms, and then outputs a close detection 1117 that is the retraction completion notification. In Fig. 12(B), in response to the close detection 1117 from IO stub 393, an FB 1118 performing initialization by clearing the held instruction is executed, and the operation of air cylinder 8 in the control period is ended. Similar processing is performed in the simulation of the next control period.

### (h-3. IO stub implementation method (3))

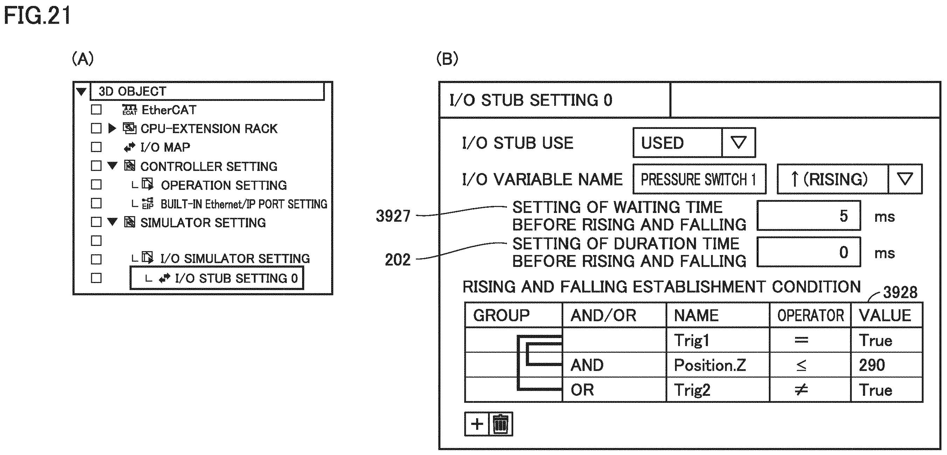

Another method implemented based on operation condition 3911 as the setting generating or updating the data referred to during the execution of the simulation program will be described below. Fig. 21 is a view schematically illustrating an IO stub implementation method (3) of the embodiment. When the user selects the item of the IO stub setting from the setting menu in Fig. 21(A), for example, IO stub generation tool 36 generates IO stub 393 indicating the behavior of pressure switch 9 from operation condition 3911 (the parameter of waiting time 3927 and condition 3928) set in setting table 392 of Fig. 18 for pressure switch 9. Operation condition 3911 can be set and changed by the user operation.

Fig. 13 is a view illustrating an example of the IO stub generated according to the implementation method (3) of the embodiment. Fig. 13 illustrates the IO stub of pressure switch 9. First, Fig. 13(A) schematically illustrates a scene where a pneumatic suction device of robot tool 216 of robot arm 214 grips workpiece 232 and releases the suction of workpiece 232 on the upper side of the conveyance surface of conveyor 240 on the place side in the "pick and place operation". Robot tool 216 includes pressure switch 9 that detects the suction and the suction release.

Fig. 13(B) illustrates a program code related to the "pick and place operation" of PLC simulator 260, and Figs. 13(C) and 13(D) illustrate a program code of IO stub 393 of pressure switch 9. In Fig. 13(B), when the simulation is executed, PLC simulator 260 executes an FB 1132 generating the grip instruction according to a grip start instruction 1131, and outputs a grip instruction 1133. When IO stub 393 in Fig. 13(C) is executed during the execution of the simulation, IO stub 393 receives grip instruction 1133, executes a delay 1141 counting (waiting) 5 ms indicated by a waiting time 3927 set in Fig. 21(B), and then outputs a suction detection 1142. Referring to Fig. 13(B), during the execution of the simulation, an FB 1135 generating a conveyance instruction is executed according to suction detection 1142 from IO stub 393, and a conveyance instruction 1136 is output.

After conveyance instruction 1136 is output, an instruction code 1143 of IO stub 393 in Fig. 13(D) is executed, and when a condition 3928 in which the value of the variable Position.Z of PLC program 371 and setting value 290 of the user are used is satisfied, namely, when condition 3928 set by the user in Fig. 21(B) is satisfied, IO stub 393 outputs an arrival notification 1144. Arrival notification 1144 corresponds to the suction release instruction. In Fig. 13(B), in response to arrival notification 1144 from IO stub 393, an FB 1138 generating the disposition instruction instructing the disposition of the workpiece is executed, and a disposition instruction 1139 is output.

A detection duration time indicated by a parameter 202 in Fig. 21(B) can be used to set a peeling completion signal of the label peeling machine. The user can set parameters 202 when applying IO stub 393 to robot 210 such as the label peeling machine or the automatic screw feeder.

According to the embodiment, IO setting support tool 33 executes the setting generating input data 146 referred to during the execution of PLC simulator 260, namely, during the execution of the simulation of the PLC program 371 or updating input data 146 in each control period, for example, the generation of IO stubs 273, 393. Accordingly, during the execution of the simulation, the setting based on the position on the three-dimensional virtual space or the setting based on the operating condition such as operation condition 3911 is selectively executed according to IO stub type 383 ("3D disposition", "no 3D disposition", "link") in Fig. 16 received from the user operation.

### <I. Program debug>

In the embodiment, offline system 20 may provide an environment in which PLC program 371 is debugged. Specifically, tool execution unit 34 reads PLC program 371 from storage 300, and displays the read program on display 38 through display controller 15. The user can perform debugging by editing PLC program 371 displayed on display 38. For example, the debugging includes the editing of PLC program 371 based on the simulation result.

This simulation result can be made different depending on the IO data including input data 146 referred to during the simulation. Input data 146 is generated or updated when IO stubs 273, 393 are executed during the simulation. Accordingly, the user can easily change the simulation result by changing the value of detection range 3926 or operation condition 3911 through IO setting support tool 33. The user can edit or debug PLC program 371 based on each simulation result such that PLC program 371 becomes optimal for control system 1.

Furthermore, in the embodiment, by changing the value (values of "link", "3D disposition", "no 3D disposition", "link", and the like) of IO stub type 383, the user can selectively switch the setting generating or updating input data 146 referred to during the execution of the simulation program between the setting based on the position on the three-dimensional virtual space by IO stub 273 and the setting based on operation condition 3911 by IO stub 393.

In addition, when IO stubs 273, 393 are generated, the user only needs to perform the operation for setting the parameter such as detection range 3926 indicating the operation of the IO device corresponding to IO stubs 273, 393 or operation condition 3911 in the environment provided by IO setting support tool 33.

Accordingly, man-hours for producing the program debugging PLC program 371 can be reduced by providing the IO setting support tool 33.

### <J. Computer program>

Although the configuration in which CPU 2 of simulation device 100 executes the program to provide the function has been exemplified in Fig. 5, some or all of these provided configuration may be mounted using a dedicated hardware circuit (for example, an application specific integrated circuit (ASIC), a field-programmable gate array (FPGA)). Alternatively, the main part of simulation device 100 may be implemented using hardware according to a general-purpose architecture. In this case, a plurality of OSs (Operating Systems) having different uses may be executed in parallel using a virtualization technology, and the necessary application may be executed on each OS.

In addition, simulation device 100 may include a plurality of processors such as CPU 2. In this case, each unit in Fig. 5 can be executed by the plurality of processors. When CPU 2 includes a plurality of cores, each unit in Fig. 5 can be executed by the plurality of cores in CPU 2.

Offline system 20 includes CPU 2, ROM 3, and RAM 4, and controls each component according to information processing. For example, the storage that stores the program of each component is an auxiliary storage device such as HDD 5 or a solid state drive, and stores PLC simulator 260 and 3D visualizer 270 executed by program execution unit 31, virtual time generation program 29, simulation control program 21, and the like.

Storage medium 92 is a medium that accumulates information such as the program by electrical, magnetic, optical, mechanical, or chemical action such that a computer, other devices, a machine, or the like can read the information such as the recorded program. CPU 2 of simulation device 100 may acquire each program of storage 300 described above from storage medium 92.

### <K. Appendix>

The present disclosure includes the following technical ideas.

### (Configuration 1)

A simulation device (200) that estimates a behavior of a system (1) including a control device (200) that controls a target (230, 240, 210), the simulation device including:
program execution means (31) configured to execute a simulation program (260) estimating the behavior;
three-dimensional virtualization means (270) configured to virtually construct the system in a three-dimensional virtual space;
setting means (31, 273, 393) configured to execute setting generating or updating data (146) referred to during the execution of the simulation program; and
reception means (11) configured to receive a user operation to the simulation device,
wherein the setting means selectively executes setting based on a position (3926) in a three-dimensional virtual space or setting based on an operating condition (3911) according to the user operation.

### (Configuration 2)

The simulation device described in the configuration 1, wherein the system includes a sensor (6) that performs a detection operation for the control, and
the setting based on the position in the three-dimensional virtual space includes a setting generating or updating data associated with an object (3961, 3962) corresponding to the sensor arranged in the three-dimensional virtual space.

### (Configuration 3)

The simulation device described in the configuration 2, wherein the three-dimensional virtualization means generates drawing data (301) for visualizing the object corresponding to the sensor disposed in the three-dimensional virtual space in the three-dimensional virtual space and drawing the object on a display (38).

### (Configuration 4)

The simulation device described in any one of the configurations 1 to 3, wherein the system includes: a sensor (7) that performs a detection operation for the control; and
a peripheral device (8) that operates in association with the control,
the detection operation of the sensor is linked with the operation of the peripheral device, and
the operation condition includes a condition (3928) based on the detection operation of the sensor linked with the operation of the peripheral device.

### (Configuration 5)

The simulation device described in any one of the configurations 1 to 3, wherein the setting generating or updating the data executed by the setting means includes a program (273, 393) corresponding to a parameter (3917, 3927, 3937) received by the user operation.

### (Configuration 6)

The simulation device described in any one of the configurations 1 to 5, wherein the three-dimensional virtualization means generates the drawing data (301) for visualizing motion of the target during the execution of the simulation program in the three-dimensional virtual space and drawing the motion on the display (38).

### (Configuration 7)

A simulation method executed by a computer (100) that estimates a behavior of a system (1) including a control device that controls a target, the simulation method including:
virtually constructing the system in a three-dimensional virtual space (S20); and
executing setting generating or updating data referred to during execution of a simulation program (S23),
wherein in executing the setting, setting based on a position in the three-dimensional virtual space or setting based on an operating condition is selectively executed according to a user operation to the computer.

### (Configuration 8)

A program (361) causing a computer (100) to execute the simulation method described in the configuration 7.

It should be considered that the disclosed embodiment is an example in all respects and not restrictive. The scope of the present invention is defined by not the description above, but the claims, and it is intended that all modifications within the meaning and scope of the claims are included in the present invention.

### REFERENCE SIGNS LIST

6: sensor, 7: limit switch, 8: air cylinder, 9: pressure switch, 10: controller, 11: input reception unit, 15: display controller, 18: period generation unit, 19: drawing data generation unit, 20: offline system, 21: simulation control program, 33: setting support tool, 34: tool execution unit, 36: IO stub generation tool, 100: simulation device, 136: arithmetic instruction unit, 146: input data, 145: output data, 200: control device, 202: parameter, 210, 311, 313: robot, 214: robot arm, 260: PLC simulator, 270: 3D visualizer, 273, 393: IO stub, 274: virtual space construction unit, 391: IO map

## Claims

1. A simulation device that estimates a behavior of a system including a control device that controls a target, the simulation device comprising:
program execution means configured to execute a simulation program estimating the behavior;
three-dimensional virtualization means configured to virtually construct the system in a three-dimensional virtual space;
setting means configured to execute setting generating or updating data referred to during the execution of the simulation program; and
reception means configured to receive a user operation to the simulation device,
wherein the setting means selectively executes setting based on a position in a three-dimensional virtual space or setting based on an operating condition according to the user operation.

2. The simulation device according to claim 1, wherein the system includes a sensor that performs a detection operation for the control, and
the setting based on the position in the three-dimensional virtual space includes a setting generating or updating data associated with an object corresponding to the sensor arranged in the three-dimensional virtual space.

3. The simulation device according to claim 2, wherein the three-dimensional virtualization means generates drawing data for visualizing the object corresponding to the sensor disposed in the three-dimensional virtual space in the three-dimensional virtual space and drawing the object on a display.

4. The simulation device according to any one of claims 1 to 3, wherein the system includes: a sensor that performs a detection operation for the control; and
a peripheral device that operates in association with the control,
the detection operation of the sensor is linked with the operation of the peripheral device, and
the operation condition includes a condition based on the detection operation of the sensor linked with the operation of the peripheral device.

5. The simulation device according to any one of claims 1 to 3, wherein the setting generating or updating the data executed by the setting means includes a program corresponding to a parameter received by the user operation.

6. The simulation device according to any one of claims 1 to 5, wherein the three-dimensional virtualization means generates the drawing data for visualizing motion of the target during the execution of the simulation program in the three-dimensional virtual space and drawing the motion on the display.

7. A simulation method executed by a computer that estimates a behavior of a system including a control device that controls a target, the simulation method comprising:
virtually constructing the system in a three-dimensional virtual space; and
executing setting generating or updating data referred to during execution of a simulation program,
wherein in executing the setting, setting based on a position in the three-dimensional virtual space or setting based on an operating condition is selectively executed according to a user operation to the computer.

8. A program causing a computer to execute the simulation method according to claim 7.
